# EUROPEAN PATENT APPLICATION

(11) **EP 3 439 374 A1**
(43) Date of publication of application: **06.02.2019**
(21) Application number: 17773849.9
(22) Date of filing: 21.02.2017
(51) Int. Cl.: H04W 52/18, H04W 36/08, H04W 52/48

(54) **TERMINAL DEVICE AND METHOD**

(30) Priority: 30.03.2016 JP 2016067456
(71) Applicant: Sharp Kabushiki Kaisha, Sakai City, Osaka 590-8522 (JP)
(72) Inventor: OUCHI Wataru, Sakai City, Osaka 590-8522 (JP); SUZUKI Shoichi, Sakai City, Osaka 590-8522 (JP); LIU Liqing, Sakai City, Osaka 590-8522 (JP); HAYASHI Takashi, Sakai City, Osaka 590-8522 (JP); AIBA Tatsushi, Sakai City, Osaka 590-8522 (JP); YOSHIMURA Tomoki, Sakai City, Osaka 590-8522 (JP)
(74) Representative: Müller Hoffmann & Partner
(86) International application number: PCT/JP2017/006335
(87) International publication number: WO 2017/169301

(57) **Abstract**

An object of the present invention is to communicate efficiently. A transmitter that sets, in a case that a timing advance command is included in a handover command, an initial value of a second power control adjustment value used for transmit power of a PUSCH including an RRC connection reconfiguration complete message for the handover command to a first power control adjustment value used for transmit power of an SRS, and, based on the first power control adjustment value, sets transmit power of the PUSCH, is included.

## Description

### Technical Field

Embodiments of the present invention relate to a technique of a terminal apparatus and a method that enable efficient communication.

This application claims priority based on JP 2016-067456 filed on March 30, 2016, the contents of which are incorporated herein by reference.

### Background Art

The 3rd General Partnership Project (3GPP), which is a standardization project, has standardized the Evolved Universal Terrestrial Radio Access (EUTRA), in which high-speed communication is enabled by adopting an Orthogonal Frequency Division Multiplexing (OFDM) communication method and flexible scheduling in a unit of prescribed frequency and time called a resource block. Note that, the overall communication that has employed the standardized EUTRA technology may be referred to as Long Term Evolution (LTE) communication.

Moreover, the 3GPP discusses the Advanced EUTRA (A-EUTRA), which enables higher-speed data transmission and has upper compatibility with the EUTRA. The EUTRA relates to a communication system based on a network in which base station apparatuses have substantially an identical cell configuration (cell size); however, regarding the A-EUTRA, discussion is made on a communication system based on a network (heterogeneous wireless network, heterogeneous network) in which base station apparatuses (cells) having different configurations coexist in the same area.

Moreover, technical discussion is made to reduce handover delay (NPL 1).

### Citation List

### Non Patent Literature

NPL 1 :"3GPP TR 36.881 v.0.5.0 (2015-11), R2-157181, 4th Dec. 2015.

### Summary of Invention

### Technical Problem

A communication device (a terminal apparatus and/or a base station apparatus) cannot communicate efficiently using known transmit power control or transmit control in some cases.

In light of the foregoing, an object of the present invention is to provide a terminal apparatus and a method that enable transmit power control and transmit control for the efficient communication.

### Solution to Problem

(1) To accomplish the object described above, the present invention is contrived to provide the following means. That is, a terminal apparatus according to an aspect of the present invention is a terminal apparatus that communicates with a base station apparatus and includes a receiver configured to receive a handover command and an uplink grant, and a transmitter configured to transmit a Sounding Reference Signal (SRS) and a Physical Uplink Shared CHannel (PUSCH), in which the transmitter, based on a transmit power control command included in the uplink grant, calculates a first power control adjustment value used for transmit power of the SRS, and the transmitter, in a case that a timing advance command is included in the handover command, sets an initial value of a second power control adjustment value used for transmit power of a PUSCH including an RRC connection reconfiguration complete message for the handover command to the first power control adjustment value of the SRS, and, based on the first power control adjustment value, sets transmit power of the PUSCH.
(2) Additionally, a method according to an aspect of the present invention is a method in a terminal apparatus that communicates with a base station apparatus, and includes the steps of: receiving a handover command and an uplink grant; transmitting a Sounding Reference Signal (SRS); transmitting a Physical Uplink Shared CHannel (PUSCH); calculating, based on a transmit power control command included in the uplink grant, a first power control adjustment value used for transmit power of the SRS; setting, in a case that a timing advance command is included in the handover command, an initial value of a second power control adjustment value used for transmit power of a PUSCH including an RRC connection reconfiguration complete message for the handover command to the first power control adjustment value of the SRS; and setting, based on the first power control adjustment value, transmit power of the PUSCH.

### Advantageous Effects of Invention

The present invention can provide improved transmission efficiency in a radio communication system in which a base station apparatus and a terminal apparatus communicate.

### Brief Description of Drawings

FIG. 1 is a diagram illustrating an example of a downlink radio frame configuration according to a first embodiment.
FIG. 2 is a diagram illustrating an example of an uplink radio frame configuration according to the first embodiment.
FIG. 3 is a diagram illustrating another example of a downlink and/or an uplink radio frame configuration according to the first embodiment.
FIG. 4 is a sequence diagram illustrating an example of a handover procedure according to the first embodiment.
FIG. 5 is a diagram illustrating an example of a block configuration of a base station apparatus according to the first embodiment.
FIG. 6 is a diagram illustrating an example of a block configuration of a terminal apparatus according to the first embodiment.

### Description of Embodiments

### First Embodiment

A first embodiment of the present invention will be described below. Description will be given by using a communication system in which a base station apparatus (base station, NodeB, or EUTRAN NodeB, evolved NodeB (eNB)) and a terminal apparatus (terminal, mobile station, user device, or user equipment (UE)) communicate in a cell.

Main physical channels and physical signals used in the present embodiment will be described. The "channel" refers to a medium used to transmit a signal, and the "physical channel" refers to a physical medium used to transmit a signal. In the present embodiment, the physical channel may be used synonymously with the physical signal. In future LTE, another physical channel may be added, the constitution or format of the existing physical channel may be changed, or another constitution or format may be added; however, the description of each embodiment of the present invention will not be affected even in a case that such addition or change is performed.

In LTE, scheduling of the physical channel or the physical signal is managed by using a radio frame. A time length of one radio frame is 10 ms, and one radio frame is constituted of 10 subframes. In addition, one subframe is constituted of two slots. That is, a time length of one subframe is 1 ms, and a time length of one slot is 0.5 ms. Moreover, scheduling is managed by using a resource block as a minimum unit of scheduling for allocating a physical channel. The "resource block" is defined by a prescribed frequency domain constituted of a set of multiple subcarriers (e.g., 12 subcarriers) on a frequency axis and a domain constituted of a prescribed Transmission Time Interval (TTI, slot, symbol). Note that, one subframe may be referred to as one resource block pair. In addition, basically in LTE, one TTI may be defined as one subframe (1 ms). Note that, the TTI may be defined as a reception time interval in a receiver side. The TTI may be defined as a transmission unit or a reception unit of the physical channel or the physical signal. That is, a time length of the physical channel or the physical signal may be defined based on a length of the TTI.

A time unit Tₛ in LTE is based on a subcarrier interval (e.g., 15 kHz) and an FFT size (e.g., 2048). That is, Tₛ is 1/(15000 × 2048) seconds. A time length of one slot is 15360 × Tₛ (that is, 0.5 ms). A time length of one subframe is 30720 × Tₛ (that is, 1 ms). A time length of one radio frame is 307200 × Tₛ (that is, 10 ms).

In LTE, Carrier Aggregation (CA) for communication using multiple cells (component careers corresponding to the cells) is defined. The CA includes a Primary Cell (PCell) that is a cell establishing initial access and RRC connection, and a secondary cell that is added/changed/deleted/activated/deactivated using the primary cell.

In LTE, Dual Connectivity (DC) for communication using multiple cells (component careers corresponding to the cells) is defined. In the DC, cells belonging to each of two base station apparatuses (a Master eNB (MeNB), a Secondary eNB (SeNB)) constitute a group. A cell group belonging to an MeNB and including a primary cell is defined as a Master Cell Group (MCB), and a cell group belonging to an SeNB and including a primary secondary cell (PSCell) is defined as a Secondary Cell Group (SCG). The primary secondary cell is, in a cell group without the primary cell, that is, in the SCG in a case that multiple cell groups are configured, a cell having a similar function to the primary cell (a secondary cell, a serving cell other than the primary cell).

The primary cell and the primary secondary cell play a role of a primary cell in each CG. Here, the primary cell may be a cell capable of transmission and/or allocation of a PUCCH and/or a control channel equivalent to a PUCCH, may be a cell associated with an initial access procedure/RRC connection procedure/initial connection establishment procedure, may be a cell capable of triggering a random access procedure in L1 signalling, may be a cell for monitoring a radio link, may be a cell for which semi-persistent scheduling is supported, may be a cell for detecting/determining RLF, and may be a cell that is always activated. Note that, in the present embodiment, a cell having a function of the primary cell and/or the primary secondary cell is referred to as a special cell in some cases. The primary cell/primary secondary cell/secondary cell may be defined for a Latency Reduction (LR) cell as in LTE.

In LTE, various Frame structure Types (FS) are defined. Next, the Frame structure Types according to LTE will be described.

A Frame structure Type 1 (FS 1) is applied to Frequency Division Duplex (FDD). That is, the FS 1 is applied to a cell operation for which the FDD is supported. The FS 1 can be applied to both Full Duplex-FDD (FD-FDD) and Half Duplex-FDD (HD-FDD). In the FDD, 10 subframes can be used for each of downlink transmission and uplink transmission. In the FDD, the downlink transmission and the uplink transmission are separated in the frequency domain. That is, different carrier frequencies are applied to the downlink transmission and the uplink transmission. In an HD-FDD operation, the terminal apparatus cannot transmit and receive at the same time, but in an FD-FDD operation, the terminal apparatus can transmit and receive at the same time.

Moreover, the HD-FDD has two types: for a type A HD-FDD operation, a guard period is created by a terminal apparatus by not receiving the last part (last symbol) of a downlink subframe immediately before an uplink subframe from the same terminal apparatus; and for a type B HD-FDD operation, each of guard periods, referred to as an HD guard subframe, is created by a terminal apparatus by not receiving a downlink subframe immediately before an uplink subframe from the same terminal apparatus, and by not receiving a downlink subframe immediately after an uplink subframe from the same terminal apparatus. That is, in the HD-FDD operation, a guard period is created by the terminal apparatus controlling a reception process of the downlink subframe. Note that, a symbol may include one of an OFDM symbol or an SC-FDMA symbol.

A Frame structure Type 2 (FS 2) is applied to Time Division Duplex (TDD). That is, the FS 2 is applied to a cell operation for which the TDD is supported. Each radio frame is constituted of two half-frames. Each half-frame is constituted of five subframes. A UL-DL configuration in a certain cell may be changed among the radio frames. Subframe control in uplink or downlink transmission may be performed in the latest radio frame. The terminal apparatus can acquire the UL-DL configuration in the latest radio frame via a PDCCH or higher layer signalling. Note that the UL-DL configuration indicates a constitution of an uplink subframe, a downlink subframe, and a special subframe, in the TDD. The special subframe is constituted of a Downlink Pilot Time Slot (DwPTS) enabling downlink transmission, a Guard Period (GP), and an Uplink Pilot Time Slot (UpPTS) enabling uplink transmission. Constitutions of the DwPTS and the UpPTS in the special subframe are managed in a table, so that the terminal apparatus can acquire the constitution via the higher layer signalling. Note that the special subframe serves as a switch point from downlink to uplink. That is, in a case of reaching the switch point, the terminal apparatus transits from reception to transmission, and the base station apparatus transits from transmission to reception. The switch point periodicity includes 5 ms and 10 ms. In a case that the switch point periodicity is 5 ms, the special subframes exist in both the half-frames. In a case that the switch point periodicity is 10 ms, the special subframe exists only in a first half-frame.

Additionally, in the TDD, a TDD enhanced Interference Management and Traffic Adaptation (eIMTA) technique considering a communication volume (traffic amount) and interference of each cell is applicable. The eIMTA is a technique that considers the communication volume and an interference amount of the downlink and/or the uplink, and dynamically switches (using an L1 level or the L1 signalling) TDD configurations, to change percentages of the downlink subframe and the uplink subframe occupying in a radio frame (that is, in 10 subframes) and optimally communicate.

A Normal Cyclic Prefix (NCP) and an Extended Cyclic Prefix (ECP) are applied to the FS 1 and the FS 2. Note that a CP length of the ECP is longer than that of the NCP.

A Frame structure Type 3 (FS 3) is applied to a Licensed Assisted Access (LAA) secondary cell operation. Further, only the NCP may be applied to the FS 3. The 10 subframes included in the radio frame are used for the downlink transmission. The terminal apparatus, unless being defined as such, or unless the downlink transmission is detected in a certain subframe, does not assume that any signal exists in the subframe, and processes the subframe as an empty subframe. The downlink transmission occupies one or multiple contiguous subframes. The contiguous subframes include a first subframe and a last subframe. The first subframe starts with any symbol or slot of the subframe (e.g., an OFDM symbol #0 or #7). Further, in the last subframe, the full subframe (that is, 14 OFDM symbols) or the indicated number of OFDM symbols based on one of DwPTS durations, are occupied. Note that, among the contiguous subframes, whether a certain subframe is the last subframe or not is indicated to the terminal apparatus by a certain field included in a DCI format. The field may additionally indicate the number of OFDM symbols used in a subframe where the field is detected or in the next subframe. Further, in the FS 3, the base station apparatus performs, before performing the downlink transmission, a channel access procedure associated with LBT.

Currently in the FS 3, only the downlink transmission is supported, but the uplink transmission may be supported in the future. In that case, the FS 3 supporting only the downlink transmission may be defined as an FS 3-1 or an FS 3-A, and the FS 3 supporting the downlink transmission and the uplink transmission may be defined as an FS 3-2 or an FS 3-B.

A terminal apparatus and a base station apparatus supporting the FS 3 may communicate in a frequency band requiring no license.

An operating band corresponding to an LAA cell or an FS 3 cell may be managed together with a table of EUTRA operating bands. For example, EUTRA operating band indices may be managed by 1 to 44, and an operating band index corresponding to the LAA (or a frequency of the LAA) may be managed by 46. For example, in an index 46, only a downlink frequency band may be defined. Further, some indices may be secured in advance such that uplink frequency bands are reserved or to be defined in the future. Further, a corresponding duplex mode may be a duplex mode different from the FDD or the TDD, and may be the FDD or the TDD. A frequency for which an LAA operation is possible is preferably 5 GHz or higher, but may be 5 GHz or lower. That is, as an operating band corresponding to the LAA, in an associated frequency, the LAA operation may be communicated.

In the present invention, a time domain may be expressed by a time length or the number of symbols. Further, a frequency domain may be expressed by a bandwidth, the number of subcarriers, the number of resource elements in a frequency direction, the number of resource blocks or the like.

In an LR cell, a TTI size may be changed based on a subframe type, higher layer configuration information, and control information included in the L1 signalling.

In the LR cell, access not requiring a grant may be possible. Note that, the access not requiring a grant is access not using control information (a DCI format, a downlink grant, an uplink grant) indicating schedules of a PDSCH and a PUSCH (a shared channel/data channel for the downlink and the uplink). That is, in the LR cell, an access method that does not perform dynamic resource allocation and transmission indication using a PDCCH (downlink control channel) may be applied.

In the LR cell, the terminal apparatus may perform Hybrid Automatic Repeat reQuest-ACKnowledgement/Negative ACKnowledgement (HARQ-ACK/NACK) and/or Channel State Information (CSI) feedback corresponding to a downlink resource (signal, channel) based on a function of the terminal apparatus (performance, capability) and a configuration from the base station apparatus, by using an uplink resource (signal, channel) mapped to an identical subframe. Note that, in this subframe, a reference resource for CSI for a measurement result of CSI in a certain subframe may be a CRS or a CSI-RS of an identical subframe. Such a subframe may be referred to as a self-contained subframe.

Note that, the self-contained subframe may be constituted of one or more contiguous subframes. That is, the self-contained subframe may be constituted of multiple subframes, or may be a single transmission burst constituted of multiple subframes. A last subframe constituting the self-contained subframe (posterior subframes including the last subframe) is preferably an uplink subframe or a special subframe. That is, in this last subframe, an uplink signal/channel is preferably transmitted.

In a case that the self-contained subframe is constituted of multiple downlink subframes and a single uplink subframe or a special subframe, a Hybrid Automatic Repeat reQuest-ACKnowledgement/Negative ACKnowledgement (HARQ-ACK/NACK) for each of the multiple downlink subframes may be transmitted in an UpPTS of the single uplink subframe or the special subframe.

A communication device, based on whether a signal is successfully received (demodulated/decoded), determines an ACK or a NACK for the signal. The ACK indicates that the communication device receives the signal, and the NACK indicates that the communication device does not receive the signal. The communication device to which the NACK is fed back may retransmit the signal corresponding to the NACK. The terminal apparatus, based on contents of a HARQ-ACK for a PUSCH transmitted from the base station apparatus, determines whether to retransmit the PUSCH. The base station apparatus, based on contents of a HARQ-ACK for a PDSCH or a PDCCH/EPDCCH transmitted form the terminal apparatus, determines whether to retransmit the PDSCH. An ACK/NACK for the PUSCH transmitted by the terminal apparatus is fed back to the terminal apparatus by using a PDCCH or a PHICH. An ACK/NACK for a PDSCH or a PDCCH/EPDCCH transmitted by the base station apparatus is fed back to the base station apparatus by using a PUCCH or a PUSCH.

Note that in the present invention, a subframe denotes a transmission unit and/or a reception unit of the base station apparatus and/or the terminal apparatus.

The base station apparatus may determine that the terminal apparatus is a Latency Reduction (LR) device, based on a Logical Channel ID (LCID) for a Common Control CHannel (CCCH) and capability information (performance information, capability information) on the terminal apparatus.

In a case that the terminal apparatus and/or the base station apparatus supports capability for the LR, a processing time (processing delay, latency) may be determined based on a length of a TTI (the number of symbols) used for a receive signal and/or a transmit signal. That is, the processing time of the terminal apparatus and/or the base station apparatus supporting the capability for the LR may be variable based on the TTI length for the receive signal and/or the transmit signal.

S1 signalling has been extended by including terminal radio capability information for paging. In a case that such paging-specific capability information is provided by the base station apparatus to a Mobility Management Entity (MME), the MME may use this information to indicate to the base station apparatus that a paging request from the MME is related to an LR terminal. An identifier may also be referred to as an IDentity or Identifier (ID).

The capability information on the terminal apparatus (UE radio access capability, UE EUTRA capability) initiates a procedure for the terminal apparatus in a connected mode, in a case that the base station apparatus (EUTRAN) needs the capability information on the terminal apparatus. The base station apparatus inquires for the capability information on the terminal apparatus. The terminal apparatus transmits, in response to the inquiry, the capability information on the terminal apparatus. The base station apparatus determines whether the capability information is supported. In a case where the capability information is supported, the base station apparatus transmits configuration information corresponding to the capability information via, for example, higher layer signalling, to the terminal apparatus. The configuration information corresponding to the capability information has been configured, and therefore, the terminal apparatus determines that transmission and/or reception based on the capability can be performed.

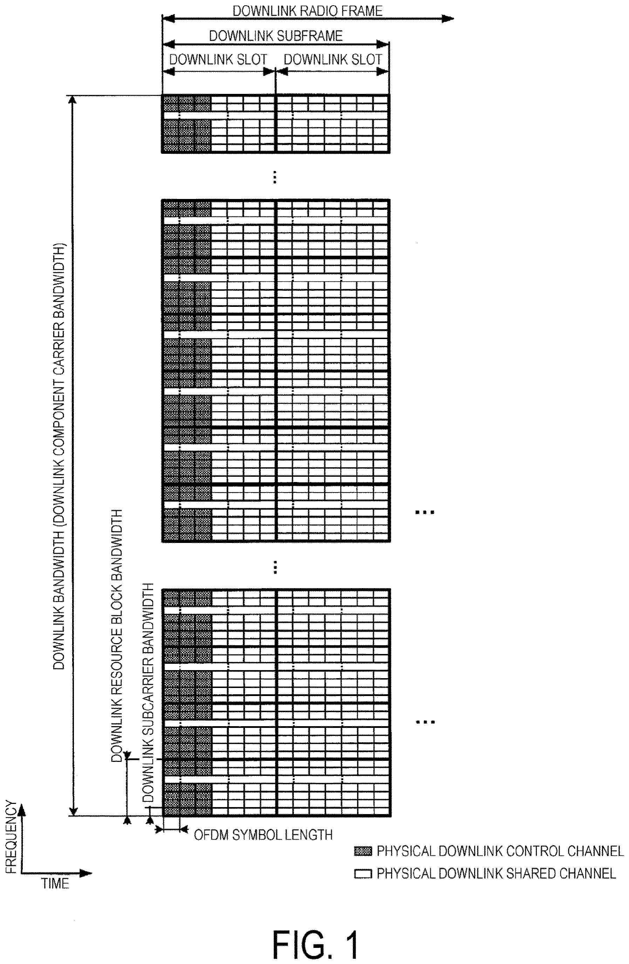

FIG. 1 is a diagram illustrating an example of a downlink radio frame configuration according to the present embodiment. In the downlink, an OFDM access scheme is used. In the downlink, a Physical Downlink Control CHannel (PDCCH), an Enhanced PDCCH (EPDCCH), a Physical Downlink Shared CHannel (PDSCH), and the like are allocated. A downlink radio frame includes downlink Resource Block (RB) pairs. The downlink RB pair is a unit for allocation of downlink radio resources and the like, and is constituted of a frequency band of a predefined width (RB bandwidth) and a time duration (two slots = one subframe). One downlink RB pair is constituted of two downlink RBs (RB bandwidth × slot) that are contiguous in time domain. One downlink RB is constituted of 12 subcarriers in frequency domain. In the time domain, the downlink RB is constituted of seven OFDM symbols, in a case where a Normal Cyclic Prefix (Normal CP: NCP) is added, while the downlink RB is constituted of six OFDM symbols, in a case where an Extended Cyclic Prefix (Extended CP: ECP) that has a CP length longer than the NCP is added. A region defined by a single subcarrier in the frequency domain and a single OFDM symbol in the time domain is referred to as a resource element (RE). The PDCCH/EPDCCH is a physical channel on which Downlink Control Information (DCI) such as a terminal device identifier, PDSCH scheduling information, Physical Uplink Shared CHannel (PUSCH) scheduling information, a modulation scheme, a coding rate, and a retransmission parameter is transmitted. Note that although a downlink subframe in a single Component Carrier (CC) is described here, a downlink subframe is defined for each CC and downlink subframes are substantially synchronized between the CCs. Here, "substantially synchronized between the CCs" means that in a case of transmitting from the base station apparatus by using multiple CCs, a transmission timing error of each CC fits in a prescribed range.

Although not illustrated here, a Synchronization Signal (SS), a Physical Broadcast CHannel (PBCH), and a DownLink Reference Signal (DLRS) may be assigned, to a downlink subframe. Examples of the DLRS are a Cell-specific Reference Signal (CRS), which is transmitted through the same antenna port (transmission port) as that for a PDCCH, a Channel State Information Reference Signal (CSI-RS), which is used to measure Channel State Information (CSI), a UE-specific Reference Signal (UERS), which is transmitted through the same antenna port as that for one or some PDSCHs, a DeModulation Reference Signal (DMRS), which is transmitted through the same transmission port as that for an EPDCCH, and the like. Moreover, carriers on which no CRS is mapped may be used. In this case, a similar signal (referred to as an enhanced synchronization signal) to a signal corresponding to some antenna ports (e.g., only antenna port 0) or all the antenna ports for the CRS can be inserted into some subframes (e.g., the first and sixth subframes in the radio frame) as time and/or frequency tracking signals. Here, an antenna port may be referred to as a transmit port. Here, the term "physical channel/physical signal is transmitted through an antenna port" includes a meaning that a physical channel/physical signal is transmitted via a radio resource or layer corresponding to the antenna port. For example, the receiver is intended to receive a physical channel or physical signal via a radio resource or layer corresponding to the antenna port.

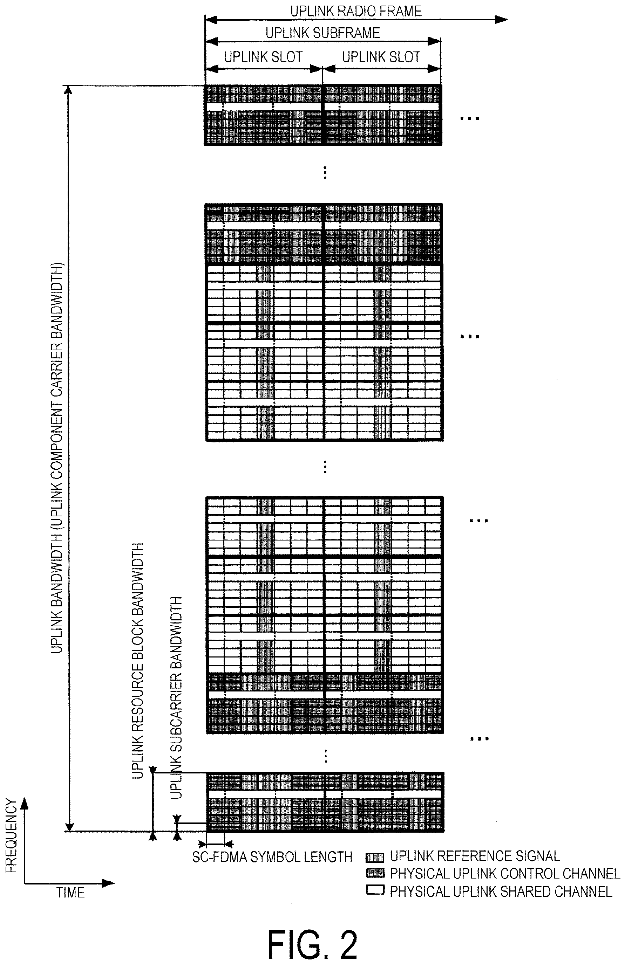

FIG. 2 is a diagram illustrating an example of an uplink radio frame configuration according to the present embodiment. An SC-FDMA scheme is used in the uplink. In the uplink, a Physical Uplink Shared CHannel (PUSCH), a Physical Uplink Control CHannel (PUCCH), and the like are allocated. Further, an UpLink Reference Signal (ULRS) is also allocated together with the PUSCH and the PUCCH. An uplink radio frame is constituted of uplink RB pairs. The uplink RB pair is a unit for allocation of uplink radio resources and the like, and is constituted of a frequency domain of a predefined width (RB bandwidth) and a time domain (two slots = one subframe). One uplink RB pair is constituted of two uplink RBs (RB bandwidth × slot) that are contiguous in the time domain. One uplink RB is constituted of 12 subcarriers in the frequency domain. In the time domain, the uplink RB is constituted of seven SC-FDMA symbols in a case where a Normal Cyclic Prefix (Normal CP: NCP) is added, while the uplink RB is constituted of six SC-FDMA symbols, in a case where a cyclic prefix that is longer than the normal cyclic prefix (Extended CP: ECP) is added. Note that although an uplink subframe in a single CC is described here, an uplink subframe may be defined for each CC.

Each of FIG. 1 and FIG. 2 illustrates an example in which different physical channels/physical signals are subjected to Frequency Division Multiplexing (FDM) and/or to Time Division Multiplexing (TDM).

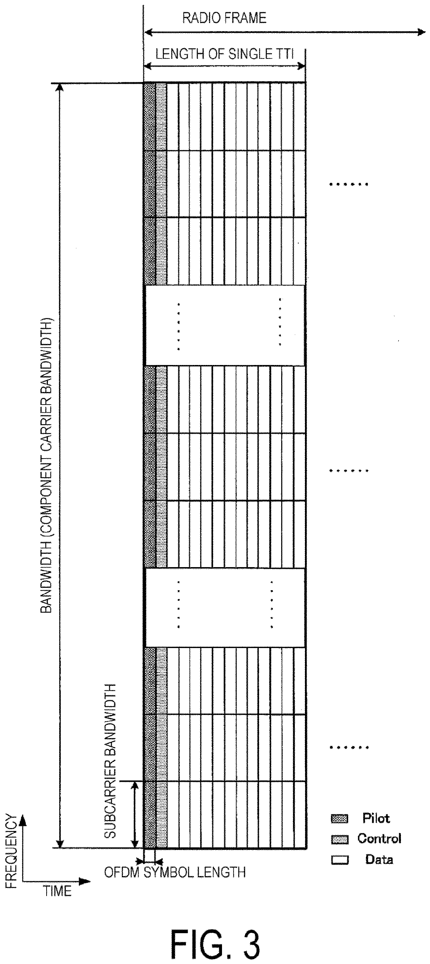

FIG. 3 is a diagram illustrating another example of a downlink and/or uplink radio frame configuration according to the present embodiment. The downlink and/or uplink radio frame is constituted of: a pilot channel (Pilot in FIG. 3) used for synchronization in terms of time and/or frequency, demodulation/decoding of a control channel (control signal) and/or a data channel (data signal, shared channel), and channel measurement (RRM, CSI, channel sounding); a control channel (Control in FIG. 3) used for transmitting control information such as a HARQ-ACK and CSI; and a data channel (Data in FIG. 3) used for transmitting user data such as an RRC message and unicast information. The pilot channel may be equivalent to a PSS/SSS, a DLRS and a ULRS, and a PRACH in LTE. The control channel may be equivalent to a PDCCH and a PUCCH in LTE. The data signal may be equivalent to a PDSCH and a PUSCH in LTE. An OFDM scheme may be used in a downlink, an SC-FDMA scheme may be used in an uplink, and an identical scheme may be used in both the downlink and the uplink. Note that although a constitution of a single CC is described here, a constitution may be defined for each CC. A subcarrier bandwidth (subcarrier interval) may be defined in reference to an operating band, may be configured from the base station apparatus via higher layer signalling, or may be defined based on a subcarrier interval of a pilot channel blindly detected by the terminal apparatus. In a case that the subcarrier interval is configured via the higher layer signalling, the subcarrier interval may be configured for each cell, or may be configured for each physical channel/physical signal. Note that, a symbol length may be uniquely defined based on the subcarrier interval, or may be defined by being associated with an added CP length. Although FIG. 3 illustrates a case in which a pilot channel, a control channel and a data channel are subjected to the TDM, a different physical channel/physical signal may be subjected to the FDM and/or the TDM as in FIG. 1 and FIG. 2.

In the present embodiment, the higher layer signalling may be system information such as an MIB and an SIB, or may be a signal/signalling of a layer higher than a physical layer such as RRC signaling.

Although FIG. 3 illustrates an example in which the pilot channel and the control channel are mapped to a single symbol in a time domain, the pilot channel and the control channel may be mapped using more than one symbol. Further, the control signal may be included in the data signal. In a case that the control channel and the data channel can be mapped in a common domain, the control channel and the data channel may be defined as a shared channel. A search space to which a control signal according to the terminal apparatus is mapped may be included in the shared channel. Information indicating the search space may be included in the system information, may be included in the RRC message, may be indicated by a control channel transmitted in a prescribed frequency position (a carrier frequency, a prescribed frequency in a bandwidth), or may be indicated by an identifier defined by the pilot channel.

Further, in FIG. 3, multiple types of signals/channels may be configured individually for the pilot channel. A channel/signal equivalent to a preamble, a synchronization channel/signal, a demodulation reference channel/signal, and a channel/signal for channel measurement may be configured individually. In a case of not being configured individually, the above-described channels/signals may be used for various types of measurement or demodulation/decoding as common channels/signals.

Further, although FIG. 3 illustrates an example in which resources of respective channels/signals are allocated over a whole bandwidth in a frequency domain, the resources may be mapped to some of frequencies (frequency resources, bandwidths). That is, a constitution in which multiple terminal apparatuses are subjected to the FDM in a single component career may be used.

Further, a subcarrier interval, an allocatable frequency resource (frequency domain), or the number of allocatable symbols (time domain) of the pilot channel in FIG. 3 may be changed depending on intended use.

Further, a position of the pilot channel and a position of the control channel in a time direction in FIG. 3 may be reversed. Transmission of the pilot channel used for channel measurement and synchronization may be controlled by information on a transmission request included in the control channel.

Further, the pilot channel for demodulation and/or decoding in FIG. 3 may be mapped into a data channel domain.

Further, the data channel in FIG. 3 may not necessarily be mapped so as to fill a TTI without the pilot channel and the control channel. That is, mapping of the data channel in the time direction may be defined based on control information included in the control channel.

Next, the physical channels and the physical signals according to the present embodiment will be described.

A parameter for a configuration of the physical channel and/or the physical signal may be configured in the terminal apparatus as higher layer parameter via the higher layer signalling. Some parameters for configurations of the physical channel and/or the physical signal may be configured in the terminal apparatus via the L1 signalling (physical layer signalling, e.g., a PDCCH/EPDCCH) such as a DCI format and a grant. Further, a default configuration or a default value of a parameter for the configuration of the physical channel and/or the physical signal may be configured in the terminal apparatus in advance. The terminal apparatus may update the default value by using the higher layer signalling in a case that the parameters for the configurations are notified. Further, in accordance with a corresponding configuration, a type of the higher layer signalling/message used for providing notification of the configuration may be different. For example, the higher layer signalling/message may include the RRC message, broadcast information, system information, or the like.

Synchronization signals include a Primary Synchronization Signal (PSS) and a Secondary Synchronization Signal (SSS). There are three types of PSSs, and the SSS is constituted of 31 types of codes that are interleaved in a frequency domain, with a central frequency or a DC subcarrier being a center. Frame timing for radio synchronization and 504 patterns of cell identities (physical cell IDs (PCIs)) for individually identifying base station apparatuses are indicated by combinations of the PSS and the SSS detected in the terminal apparatus. The terminal apparatus identifies the physical cell ID in a synchronization signal received by cell search. The PSS/SSS is allocated using six RBs (that is, 72 REs, 72 subcarriers) at the center of the transmission bandwidth (or system bandwidth). However, for some subcarriers at both ends of the 6 RBs to which no PSS/SSS sequence is allocated, the PSS/SSS may not necessarily be mapped. That is, the terminal apparatus also processes a resource to which no PSS/SSS sequence is allocated by assuming the resource is a PSS/SSS resource. In other words, in the 6 RBs at the center, a resource to which no PSS/SSS is transmitted may exist.

In an LR cell, a physical channel/physical signal for frequency synchronization and time synchronization may be defined as an individual physical channel/physical signal. That is, as for the physical channel for the frequency synchronization and the physical channel for the time synchronization, transmission timing (or a transmission timing offset) and/or a transmission cycle may be defined individually.

The Physical Broadcast CHannel (PBCH) is used to inform (configure) control parameters (broadcast information, System Information (SI)) that are commonly used by terminal apparatuses in a cell. The terminal apparatuses in the cell are notified, on the PDCCH, of the radio resource in which broadcast information is transmitted. Broadcast information that is not notified on the PBCH is transmitted, as a layer-3 message (or system information) for making notification of the broadcast information by the PDSCH, in the radio resource that has been notified. The TTI (repetition rate) of the PBCH to which a Broadcast CHannel (BCH) is mapped is 40 ms.

Six RBs (that is, 72 REs, 72 subcarriers) at the center of the transmission bandwidth (or system bandwidth) are allocated to the PBCH. Moreover, the PBCH is transmitted in 4 contiguous radio frames starting from a radio frame satisfying SFN (system frame number, radio frame number) mod 4 = 0. A scramble sequence of the PBCH is initialized with the PCI in each radio frame satisfying the SFN (radio frame number) mod 4 = 0. The number of antenna ports for the PBCH is the same as the number of antenna ports for the CRS. The PDSCH is not transmitted in resources to which the PBCH or the CRS is allocated (mapped). That is, the terminal apparatus does not expect that the PDSCH is mapped to the same resource for the PBCH or the CRS. In addition, the base station apparatus does not transmit the PDSCH by mapping the PDSCH to the same resource for the PBCH or the CRS.

The PBCH is used to broadcast system control information (Master Information Block (MIB)).

The MIB includes system information transmitted on a BCH. For example, the system information included in the MIB includes a downlink transmission bandwidth, a PHICH configuration, and a system frame number. The MIB also includes spare bits (bit sequence) of 10 bits. Note that the downlink transmission bandwidth may be included in mobility control information. The mobility control information may be included in information on an RRC connection reconfiguration. That is, the downlink transmission bandwidth may be configured via an RRC message/higher layer signalling. Further, the information on the RRC connection reconfiguration may be included in a Downlink Dedicated Control CHannel (DL-DCCH) message. The DL-DCCH message is one of RRC messages transmitted from the base station apparatus to the terminal apparatus.

A UL-DCCH message may include a message for one of the RRC connection reconfiguration, downlink information transfer, a security mode, counter check, a terminal apparatus information request, and inquiry of terminal apparatus capability information. For the DL-DCCH message, one of the above-described messages may be selected.

The UL-DCCH message may include a message for one of a measurement report, an RRC connection reconfiguration complete, an RRC connection establishment complete, uplink information transfer, a security mode complete, a security mode response, a counter check response, and terminal apparatus capability information. For the UL-DCCH message, one of the above-described messages may be selected.

Note that, the bit sequence may be referred to as a bitmap in the present invention. The bit sequence may be constituted of at least one bit.

System information to be transmitted in another form than the MIB is transmitted in a System Information Block (SIB). A System Information message (SI message) is used to transmit at least one SIB. All the SIBs included in the SI message are transmitted at the same cycles. Furthermore, all the SIBs are transmitted on a Downlink Shared CHannel (DL-SCH). Note that the DL-SCH may be referred to as DL-SCH data or a DL-SCH transport block. Note that the transport block is used synonymously with a transport channel according to one aspect of the present invention.

The resource allocation of the PDSCH, on which the DL-SCH to which an SI message is mapped is transmitted, is indicated by a PDCCH along with a CRC scrambled with an SI-RNTI. The search space of the PDCCH along with the CRC scrambled with the SI-RNTI is a common search space.

The resource allocation of the PDSCH, on which the DL-SCH to which information on a random access response is mapped is transmitted, is indicated by a PDCCH along with a CRC scrambled with an RA-RNTI. The search space of the PDCCH along with the CRC scrambled with the RA-RNTI is a common search space.

The resource allocation of the PDSCH, on which a PCH to which a paging message is mapped is transmitted, is indicated by a PDCCH along with a CRC scrambled with a P-RNTI. The search space of the PDCCH along with the CRC scrambled with the P-RNTI is a common search space. Note that the PCH may be referred to as PCH data or a PCH transport block. The paging message may be used synonymously with the PCH, according to one aspect of the present invention.

Each type of SIBs has different system information that is transmittable. That is, different information is indicated for each type.

For example, a System Information Block type 1 (SIB 1) includes information associated with estimation (evaluation, measurement) in a case that the terminal apparatus makes access to a certain cell, and defines scheduling of other system information. For example, the SIB 1 includes: information associated with cell access such as a PLMN identifier list, a cell identity, and a CSG identifier; cell selection information; a maximum power value (P-Max); a frequency band indicator; an SI-window length; a transmission cycle of an SI message; a TDD configuration, and the like.

After receiving the SIB 1 through broadcasting or dedicated signalling, in a case where the terminal apparatus is in an idle mode or in a connected mode while T311 is in operation, and the terminal apparatus is a category 0 terminal, and in a case where information indicating that the category 0 terminal is allowed to access a cell (category0Allowed) is not included in the SIB 1, the terminal apparatus determines that access to a cell is prohibited. That is, in the SIB 1, in a case that the category 0 terminal is not allowed to access a cell, the category 0 terminal cannot access the cell.

For example, a System Information Block type 2 (SIB 2) includes radio resource configuration information that is common for all terminal apparatuses. For example, the SIB 2 includes frequency information such as an uplink carrier frequency and an uplink bandwidth, and information on a time adjusting timer. The SIB 2 also includes information on a configuration for a physical channel/physical signal, such as a PDSCH, a PRACH, an SRS, and an uplink CP length. The SIB 2 further includes information on a configuration for signalling of higher layers such as RACH and BCCH.

For example, a System Information Block type 3 (SIB 3) includes information (parameter, parameter value) common for intra-frequency cell re-selection, inter-frequency cell re-selection, and inter-Radio Access Technology (RAT) cell re-selection.

Although 20 types of SIBs are provided in LTE, a new one may be added/defined according to its use. Note that, for an LTE terminal supporting an LR function or a terminal apparatus supporting both an LTE function and an LR function, each configuration of the LR (resource allocation, various identifiers, and the like) may be performed using an SIBX (X is a prescribed value). Various configurations for the LR (a parameter, an information element) may be included in an existing type of SIB, or may be included in an SIB added for the LR.

An SI message may include an SIB different from the SIB 1.

As for the PBCH, a coded BCH transport block is mapped in four subframes within a 40 ms interval. Such 40 ms timing for the PBCH is blindly detected. That is, there is no explicit signalling indicating the 40 ms timing. Each subframe is assumed to be self-decodable. That is, the BCH is assumed to be in a fairly good channel state, and can be decoded from a single reception.

The MIB (or PBCH) uses a fixed schedule with a period of 40 ms and repetitions within 40 ms. The first transmission of the MIB is scheduled in a subframe #0 of a radio frame that satisfies SFN mod 4 = 0, where the remainder of 0 is obtained by dividing System Frame Number (SFN) by 4, and the repetitions are scheduled in subframes #0 of all other radio frames. That is, information included in the MIB may be updated with the 40 ms period. Note that the SFN denotes a radio frame number.

The SIB 1 uses a fixed schedule with a period of 80 ms and repetitions within 80 ms. The first transmission of the SIB 1 is scheduled in a subframe #5 of a radio frame that satisfies SFN mod 8 = 0, which is obtained by dividing SFN by 8, and the repetitions are scheduled in subframes #5 of all other radio frames that satisfy SFN mod 2 = 0, where the remainder of 0 is obtained by dividing SFN by 2.

The SI message is transmitted within periodically occurring time domain windows (SI-windows) by using dynamic scheduling (PDCCH scheduling, a PDCCH together with the CRC scrambled with a System Information Radio Network Temporary Identifier (SI-RNTI)). Each SI message is associated with an SI-window, and the SI-windows of different SI messages do not overlap with each other. Within a single SI-window, only the corresponding SI is transmitted. The length of the SI-window is common for all SI-messages and is configurable. Within the SI-window, the corresponding SI message can be transmitted any number of times in any subframe other than Multimedia Broadcast Multicast Service Single Frequency Network (MBSFN) subframes, uplink subframes in TDD, and subframes #5 of radio frames that leave a remainder of 0 in a case that SFN is divided by 2 (SFN mod 2 = 0). The terminal apparatus acquires the detailed time domain scheduling (and other information, such as frequency domain scheduling and a used transport format), by decoding the SI-RNTI of the PDCCH. Note that the SI message includes an SIB different from the SIB 1.

The terminal apparatus applies a system information acquisition procedure to acquire the AS and NAS system information that is broadcasted by the EUTRAN. This procedure is applied to a terminal apparatus in an idle mode (idle state, RRC_IDLE) and in a connected mode (connected state, RRC_CONNECTED).

The terminal apparatus needs to hold a valid version of demanded system information.

In a case of being in the idle mode, via a System Information Block type 8 (SIB 8) relying on the support for an associated RAT or a System Information Block type 17 relying on the support for Wireless Local Area Network (WLAN) interworking assisted by a Radio Access Network (RAN), not only the SIB 2 but also the MIB and the SIB 1 are needed. That is, the needed SIB may differ depending on the function supported by the terminal apparatus.

To be in the connected mode, the terminal apparatus needs to receive the MIB, the SIB 1, the SIB 2, and the SIB 17.

The terminal apparatus deletes the system information three hours after the terminal apparatus confirms that the stored system information is valid. That is, the terminal apparatus does not permanently keep the system information that has been retained once. The terminal apparatus deletes the retained system information after a lapse of a prescribed period of time.

In a case that a system information value tag included in the SIB 1 is different from the one of the retained system information, the terminal apparatus regards the retained system information as invalid, except for a System Information Block type 10 (SIB 10), a System Information Block type 11 (SIB 11), a System Information Block type 12 (SIB 12), and a System Information Block type 14 (SIB 14).

The PBCH is allocated to six RBs (i.e., 72 REs) at the center of a downlink bandwidth configuration in the frequency domain, and is allocated to indices (OFDM symbol indices) 0 to 3 in a slot 1 (the second slot in a subframe, a slot index 1) of a subframe 0 (the first subframe in a radio frame, a subframe index 0) in the time domain. Note that the downlink bandwidth configuration is represented by a multiple of the resource block size, in the frequency domain, expressed as the number of subcarriers. Furthermore, the downlink bandwidth configuration is a downlink transmission bandwidth configured in a certain cell. That is, the PBCH is transmitted by using six RBs at the center of the downlink transmission bandwidth.

The PBCH is not transmitted using a resource reserved for a DLRS. That is, the PBCH is mapped with avoiding a DLRS resource. Regardless of the actual configuration, the PBCH is mapped by assuming CRSs for existing antenna ports 0 to 3. Furthermore, resource elements of the CRSs for the antenna ports 0 to 3 are not used for PDSCH transmission.

As broadcast information, a Cell Global Identifier (CGI) indicating a cell-specific identifier, a Tracking Area Identifier (TAI) for managing a standby area by paging, random access configuration information (such as a transmission timing timer), shared radio resource configuration information, neighboring cell information, and uplink access restriction information on the cell are notified.

In a case that access from the LR cell is assisted using the LTE cell, system control information/system information for the LR may be transmitted using the LTE cell. That is, the terminal apparatus, after entering into the connected mode in the LTE cell, may acquire the system control information/system information on the LR cell, using higher layer signalling (an RRC message and/or system information). In the idle mode, the system information on the LR cell may be detected from the system information transmitted in the LTE cell.

In a case that the LR cell is accessed in a standalone manner, the terminal apparatus, during the idle mode, detects the system control information/system information on the LR from the LR cell.

In a case that a physical control channel (a parameter for the physical control channel) corresponding to a PUCCH of the LTE is configured in an uplink cell and an uplink subframe of the LR, downlink/uplink transmission (reception) in the LR cell may be processed independently from the LTE cell.

In the LR cell, a broadcast channel equivalent to the PBCH may not necessarily be transmitted in a case that access is assisted using the LTE cell. In a case that the LR cell is operable in the standalone manner, the broadcast channel equivalent to the PBCH may be transmitted. At that time, resource allocation of the broadcast channel may be defined, based on a control channel allocated to a prescribed frequency domain and/or configuration information included in a shared channel. That is, the broadcast channel in the LR cell may not necessarily be transmitted at a specific cycle.

In LTE, a DLRS is classified into multiple types according to its use. For example, a CRS is a pilot signal transmitted with prescribed power in each cell, and is a DLRS periodically repeated in the frequency domain and in the time domain, based on a prescribed rule. The terminal apparatus receives the CRS to measure reception quality (Reference Signal Received Power (RSRP), Reference Signal Received Quality (RSRQ)) for each cell. The terminal apparatus may also use the CRS as a reference signal for demodulation of a PDCCH or a PDSCH transmitted concurrently with the CRS. The sequence used for the CRS is distinguishable in each of the cells. That is, the sequence used for the CRS may be configured based on a cell ID.

The DLRS is also used for estimation (channel estimation) of a downlink channel variation. The DLRS used for estimation of channel variation (channel state) is referred to as a CSI-RS. Furthermore, a DLRS individually configured for each terminal apparatus is referred to as UERS, DMRS, or Dedicated RS, and is referred for a channel compensation process on a channel, in a case that an EPDCCH or a PDSCH is demodulated. The DMRS exists for each of a downlink and an uplink. For easier identification, in the present invention, the DMRS for the downlink is referred to as the UERS or a DL DMRS, and the DMRS for the uplink is simply referred to as the DMRS or a UL DMRS.

The CSI includes a Channel Quality Indicator (CQI), a Precoding Matrix Indicator (PMI), a Precoding Type Indicator (PTI), and a Rank Indicator (RI), which can be used for respectively specifying (representing) a suitable modulation scheme and coding rate, a suitable precoding matrix, a suitable PMI type, and a suitable rank. Note that each of the indicators may be denoted as an indication. Moreover, the CQI and the PMI are classified into wideband CQI and PMI in which transmission using all the resource blocks in a single cell is assumed, and subband CQI and PMI in which transmission using some contiguous resource blocks (subbands) in a single cell is assumed. Moreover, the PMI include a normal type of PMI indicating a single suitable precoding matrix with a single PMI, and another type of PMI indicating a single suitable precoding matrix with two kinds of PMIs, which are a first PMI and a second PMI. Note that the CSI is reported on a PUCCH and a PUSCH. The terminal apparatus, in a case that a parameter for the CSI-RS is not configured, or in a case that the terminal apparatus does not have a function for receiving/measuring the CSI-RS, may measure the CSI based on the CRS.

Channel State Information - Interference Measurement (CSI-IM) is performed based on a zero power CSI-RS resource. The zero power CSI-RS used for the CSI-IM is, unlike in a case of measuring the CSI, not transmitted from the connected base station apparatus (cell). That is, the terminal apparatus uses a resource to which the CSI-RS is not mapped to measure interference power and noise power of a neighbor cell (that is, power of a signal transmitted from a base station apparatus and/or a terminal apparatus belonging to the neighbor cell (non -serving cell) or the noise power). In a case of measuring the CSI, a non-zero power CSI-RS resource is used. The zero power CSI-RS resource and the non-zero power CSI-RS resource are individually configured using higher layer parameters. Note that, the resources are configured based on an index indicating which of resource elements in one resource block is used to perform and a transmission subframe and a transmission cycle (a measurement subframe and a measurement cycle) or a subframe pattern. Note that, in a case of the subframe pattern, a subframe to which the zero power CSI-RS resource is allocated is indicated using a 16-bit bit sequence. The subframe to which the zero power CSI-RS resource is allocated is set to "1". Note that, the terminal apparatus does not expect that the zero power and the non-zero power CSI-RS resources are configured in a subframe identical to a Physical Multicast CHannel (PMCH) in a certain serving cell. Note that, a configuration for the zero power CSI-RS resource may be configured to be used for usage other than the CSI-IM.

Further, as for the subframe pattern, in a serving cell of the FS 1, the terminal apparatus does not expect that one of low 6 bits of 16 bits is set to "1" for an NCP, and that one of low 8 bits of 16 bits is set to "1" for an ECP. Further, as for 4 CRS ports, in a serving cell of the FS 2, the terminal apparatus does not expect that one of low 6 bits of 16 bits is set to "1" for an NCP, and that one of low 8 bits of 16 bits is set to "1" for an ECP.

A Discovery Signal(s) (DS) is used, in a frequency for which a parameter for the DS is configured, for time frequency synchronization, cell identification, and Radio Resource Management (RRM) measurement (intra- and/or inter-frequency measurement). Further, the DS is constituted of multiple signals, and the signals are transmitted in an identical cycle. The DS may be constituted of PSS/SSS/CRS resources, and additionally, may be constituted of a CSI-RS resource. In the DS, RSRP or RSRQ may be measured using a resource to which a CRS or a CSI-RS is mapped. Timing in which the DS is measured (a measurement subframe and a measurement cycle) is determined based on parameters included in a DS Measurement Timing Configuration (DMTC). The measurement cycle of the DS is configured as multiples of 40 ms, such as 40 ms, 80 ms, and 120 ms. Further, the measurement subframe of the DS may be linked to the measurement cycle (transmission cycle) and may be configured as a separate parameter from the cycle. Further, the measurement subframe may be a subframe offset with respect to a subframe 0 having a system frame number 0. Further, the measurement subframe may be configured based on a subframe offset with a subframe corresponding to the subframe 0 in the measurement cycle. Note that, RRM measurement includes at least one of the RSRP measurement, the RSRQ measurement, and RSSI measurement. Note that the DS may also be referred to as a Discovery Reference Signal(s) (DRS). Note that, a parameter for the DMTC (configurations of the subframe offset and the cycle) is included in a measurement DS configuration.

The terminal apparatus knows a start position of a DS occasion (a start position of a subframe) from which the DS is possibly transmitted by a DMTC configuration. A length of the DS occasion is fixed (e.g., 6 subframes). In a subframe in the DS occasion, a subframe duration in which the DS is actually transmitted is configured in the measurement DS configuration as a DS continuation duration (DS occasion continuation duration). The CRS included in the DS may be transmitted in all subframes in the DS continuation duration. Additionally, in a case that a parameter for the CSI-RS is included in the measurement DS configuration, the terminal apparatus can measure CSI-RSRP. Note that, the measurement DS configuration may be included in a measurement object configuration. That is, in a case that the measurement DS configuration is included in the measurement object configuration, the terminal apparatus can measure the DS based on the DMTC. On the basis of the DS continuation duration, the terminal apparatus monitors the DS from a beginning subframe of the DS occasion. The terminal apparatus monitors a corresponding DS (a CRS and a CSI-RS), based on the continuation duration from a subframe in which a PSS/SSS included in the DS is detected.

The CRS included in the DS may be mapped to all subframes in the continuation duration.

Zero or more resources may be configured for the CSI-RS included in the DS. The CSI-RS included in the DS may be listed and managed. An ID and a CSI-RS resource configuration in the list may be linked. That is, the number of CSI-RSs included in a single DS (a single continuation duration) may be multiple.

The DS may be transmitted from the base station apparatus constituting a cell that can be activated/deactivated (on/off) (that is, using a frequency of the cell that can be activated/deactivated (on/off)).

Note that, in the present invention, the continuation duration is synonymous with one or more contiguous subframes or symbols. Further, the continuation duration may be referred to as a burst. That is, the burst is also synonymous with one or more contiguous subframes or symbols. A unit (dimension) used for the continuation duration may be determined based on configured parameters.

The measurement cycle and the measurement subframe are parameters for measurement in the terminal apparatus, and simultaneously are also parameters for transmission in the base station apparatus. Further, the parameters for the reception in the terminal apparatus simultaneously may also be parameters for transmission in the base station apparatus. That is, the base station apparatus, based on the parameters configured for the terminal apparatus, may transmit a corresponding downlink signal. Further, parameters for transmission in the terminal apparatus may also be parameters for reception or measurement in the base station apparatus. That is, the base station apparatus, based on the parameters configured for the terminal apparatus, may receive a corresponding uplink signal.

A configuration of the CSI-RS included in the measurement DS configuration includes an ID linked to a CSI-RS to be measured (ID of a measurement CSI-RS), a physical layer cell ID and a scrambling ID used for sequence generation, a resource configuration for determining a time frequency resource of the CSI-RS (a pair of resource elements), a subframe offset indicating a subframe offset with an SSS, and a power offset individually configured for the CSI-RS.

The measurement DS configuration includes, an add/change list and a delete list of IDs corresponding to the configuration of the CSI-RS. The terminal apparatus measures a resource of the CSI-RS associated with an ID of a measurement CSI-RS set in the add/change list. Further, the terminal apparatus stops measuring a resource of the CSI-RS associated with an ID of a measurement CSI-RS set in the delete list.

A DS occasion corresponding to a certain cell (frequency) is constituted of a cycle with a continuation duration of one to five contiguous subframes for the Frame structure Type 1, or constituted of a cycle with a continuation duration of two to five contiguous subframes for the Frame structure Type 2. In the cycle and the continuation duration, the terminal apparatus assumes existence of the DS and performs measurements.

The CRS constituting the DS (or included in a subframe of the DS occasion) is mapped to a resource of an antenna port 0, in DwPTSs of all downlink subframes and special subframes in the duration. Note that, "constituting the DS" may be synonymous with "included in a subframe of the DS occasion".

The PSS included in the DS is mapped to a first subframe of a duration thereof for the Frame structure Type 1, and mapped to a second subframe of a duration thereof for the Frame structure Type 2.

The SSS included in the DS is mapped to a first subframe of a duration thereof.

Note that, in a case that the DS is included in a measurement object for an LAA frequency, a resource of a PSS/SSS of a corresponding DS may be shifted in a frequency direction and may be mapped. A shift amount may be determined based on a prescribed ID such as a cell ID or a value configured by a higher layer. Further, in the case that the DS is included in the measurement object for the LAA frequency, the resource and a sequence of the PSS/SSS of the corresponding DS may be extended based on a measurement bandwidth.

As for the CSI-RS included in the DS, a non-zero power resource is mapped to zero or more subframes of a duration thereof.

The terminal apparatus may perform measurement assuming that there is a single DS occasion for each DMTC cycle.

In the LAA frequency, additionally, an initial signal and a reservation signal may be transmitted from the base station apparatus and/or the terminal apparatus.

The initial signal is a signal used for indicating a transmission start position of a data signal (PDSCH and PUSCH), a control signal (PDCCH and PUCCH), and a reference signal (DLRS and ULRS). The initial signal is also referred to as a preamble. That is, the terminal apparatus and the base station apparatus, in a case of receiving the initial signal, can receive the following data signals and control signals.

The reservation signal performs the LBT, and in a case of determining that a channel is clear, transmits a signal that has energy larger than a threshold value and indicates occupation of the channel, so as to prevent interruption from another base station apparatus and terminal apparatus. Data may not necessarily be mapped to the reservation signal itself.

The initial signal plays a role of the reservation signal in some cases. Further, control information may be mapped to the initial signal. Further, the initial signal may be used for time frequency synchronization and cell identification.

The initial signal and/or the reservation signal may be used to configure Automation Gain Control (AGC).

The terminal apparatus may determine, based on whether the LBT is performed in the base station apparatus, whether the DS and the PSS/SSS/CRS/CSI-RS (a signal, other than the DS, that is periodically transmitted) are to be transmitted periodically. The terminal apparatus, in a case that the LBT is performed in the base station apparatus, measures the DS by assuming that the DS is not periodically transmitted.

The base station apparatus, in a case of transmitting the DS in the LAA frequency, may map data information and/or control information into the DS occasion. The data information and/or the control information may include information on an LAA cell. For example, the data information and/or the control information may include a frequency to which the LAA cell belongs, a cell ID, load or congestion condition, interference/transmit power, a channel occupation time, and buffer condition relating to transmission data.

In the LAA frequency, in a case that the DS is measured, a resource used for each signal included in the DS may be extended. For example, as for the CRS, a resource corresponding not only to the antenna port 0, but also to antenna ports 2, 3 and the like may be used. Further, as for the CSI-RS, a resource corresponding not only to an antenna port 15, but also to antenna ports 16, 17 and the like may be used.

In the LR cell, in a case that a resource related to the DS is configured for the terminal apparatus by using higher layer signalling (RRC signaling) or system information, the terminal apparatus may be dynamically indicated whether to receive the DS, using L1 signalling (control information equivalent to a field in a PDCCH or a DCI format) and L2 signalling (control information equivalent to MAC CE), that is, a lower layer signal (a signal in a layer lower than an RRC layer).

In the LR cell, an RS for demodulation/decoding and an RS for CSI measurement may be a common resource, or may be different resources in a case of being defined individually.

A PDCCH is transmitted using several OFDM symbols (e.g., 1 to 4 OFDM symbols) from the beginning of each subframe. An EPDCCH is a PDCCH allocated in OFDM symbols, in which a PDSCH is allocated. A parameter for the EPDCCH may be configured as a higher layer parameter via an RRC message (higher layer signalling). The PDCCH or EPDCCH is used to notify the terminal apparatus of radio resource allocation information in accordance with scheduling determined by the base station apparatus, information indicating an adjustment quantity for an increase or decrease in the transmit power, and other control information. That is, the PDCCH/EPDCCH is used to transmit DCI (or a DCI format including at least one piece of DCI). In each embodiment of the present invention, in a case where the PDCCH is simply described, both physical channels that are the PDCCH and the EPDCCH are included, unless otherwise specified.

The PDCCH is used to notify a terminal apparatus (UE) and a relay station device (RN) of information on resource allocations of a Paging CHannel (PCH) and a DL-SCH, and HARQ information on the DL-SCH (DL HARQ). The PDCCH is also used to transmit an uplink scheduling grant and a sidelink scheduling grant. That is, the PDCCH is used for transmitting DCI (resource allocation of the PDSCH) indicating resource allocation of the PCH and/or the DL-SCH, and DCI indicating a HARQ-ACK for the PCH and/or the DL-SCH. The terminal apparatus detects the PDSCH, to which the PCH or the DL-SCH is mapped, based on these pieces of DCI.

The DCI indicating the resource allocation of the PCH and/or the DL-SCH may include information related to the resource allocation/information related to virtual resource allocation (information related to the resource block assignment) of the PDSCH, and information related to the number of the antenna ports or layers of a UERS or a DMRS, which is used for demodulating the PDSCH.

The DCI indicating the HARQ-ACK for the PCH and/or the DL-SCH may include: information related to a modulation and coding scheme; information indicating either initial transmission or retransmission of the PCH or DL-SCH transport block; information indicating a start point (an initiating point for loading stored data (HARQ soft buffer)) in a circular buffer (Redundancy Version); information related to a Downlink Assignment Index (DAI) used for a HARQ-ACK procedure in TDD, in which a possibility of a HARQ protocol error such as an ACK wrong transmission or a PDCCH detection failure (information related to a HARQ-ACK subframe for the PUSCH (the UL-SCH); and information related to a HARQ-ACK subframe for the PDSCH (the PCH or the DL-SCH)).

The EPDCCH is used to notify the terminal apparatus (UE) of the DL-SCH resource allocation and the HARQ information on the DL-SCH. The EPDCCH is also used to transmit the uplink scheduling grant and the sidelink scheduling grant.

The PDCCH is transmitted by aggregating one or some contiguous Control Channel Elements (CCEs). Note that a single CCE corresponds to nine Resource Element Groups (REGs). The number of CCEs available in a system is determined excluding a Physical Control Format Indicator CHannel (PCFICH), a Physical HARQ Indicator CHannel (PHICH), and the like. The PDCCH supports multiple formats (PDCCH formats). For each PDCCH format, the number of CCEs, the number of REGs, and the number of PDCCH bits are defined. A single REG is constituted of four REs. That is, one PRB may include up to three REGs. The PDCCH format is determined depending on the size of the DCI format, and the like.

Since the multiple PDCCHs are mapped throughout downlink transmission bandwidth, after all the multiple PDCCHs are subject to the modulation and coding process, a terminal apparatus keeps on decoding until the terminal apparatus detects the PDCCH addressed to the terminal apparatus itself. That is, the terminal apparatus cannot detect the PDCCH, even in a case of receiving only a part of the frequency domain and demodulating and decoding the received frequency domain. The terminal apparatus becomes capable of correctly detecting the PDCCH (a PDCCH candidate) addressed to the terminal apparatus itself, only after receiving the entire PDCCHs mapped to the whole downlink transmission bandwidth.

Multiple PDCCHs may be transmitted in a single subframe. Moreover, the PDCCH is transmitted through the same set of antenna ports as that for the PBCH. The EPDCCH is transmitted through an antenna port different from that for the PDCCH.

The terminal apparatus monitors a PDCCH addressed to the terminal apparatus itself and receives the PDCCH addressed to the terminal apparatus itself, before transmitting and/or receiving downlink data (DL-SCH) or a layer-2 message and a layer-3 message, which are higher layer control information (such as a paging or a handover command), and acquires, from the PDCCH, radio resource allocation information that is named an uplink grant in a case of transmission and a downlink grant (downlink assignment) in a case of reception. Note that the PDCCH can be constituted to be transmitted in a region of resource blocks to be allocated by the base station apparatus individually to the terminal apparatus, in addition to being transmitted in the OFDM symbols described above.

The DCI is transmitted in a specific format. The uplink grant and the downlink grant are transmitted in different formats. For example, the terminal apparatus can acquire the uplink grant from a DCI format 0, and can acquire the downlink grant from a DCI format 1A. In addition, other DCI formats include a DCI format containing only DCI indicating a transmit power control command for the PUSCH or the PUCCH (a DCI format 3/3A), a DCI format containing DCI indicating a UL-DL configuration (a DCI format 1C), and the like. For example, the radio resource allocation information for the PUSCH and the PDSCH is one type of DCI.

The terminal apparatus can configure various parameters of corresponding uplink signals and downlink signals, based on the detected DCI (a value set in a detected DCI field), and can perform transmission and/or reception. For example, in a case that the terminal apparatus detects DCI related to PUSCH resource allocation, the terminal apparatus can allocate the PUSCH resource based on the detected DCI, and can transmit the PUSCH. In a case that the terminal apparatus detects a Transmit Power Control command (TPC command) for the PUSCH, the terminal apparatus can adjust the transmit power of the PUSCH, based on the detected DCI. In a case that the terminal apparatus detects DCI related to PDSCH resource allocation, the terminal apparatus can receive the PDSCH from a resource indicated, based on the detected DCI.

The terminal apparatus can acquire (determine) various pieces of DCI (DCI included in various DCI formats), by decoding a PDCCH along with a Cyclic Redundancy Check (CRC) scrambled with a specific Radio Network Temporary Identifier (RNTI). A higher layer configures which PDCCH along with the CRC scrambled with which RNTI is to be decoded.

The terminal apparatus may retransmit the PUSCH based on a certain piece of DCI. That is, DCI may include DCI corresponding to an ACK/NACK of the PUSCH.

Control information transmitted on a DL-SCH or a PCH corresponding to the PDCCH differs depending on with which RNTI the PDCCH is scrambled. For example, in a case where a PDCCH is scrambled with a Paging RNTI (P-RNTI), information on the paging is transmitted on the PCH. In a case where a PDCCH is scrambled with a System Information RNTI (SI-RNTI), system information may be transmitted on the DL-SCH.

Moreover, the DCI format is mapped to a search space (Common Search Space (CSS), UE-specific SS (UESS)) given by a specific RNTI. Furthermore, the search space is defined as a set of PDCCH candidates to be monitored. That is, in each embodiment of the present invention, monitoring a search space is used synonymously with monitoring a PDCCH. Note that the CSS and the UESS in the PCell sometimes overlap each other. In the EPDCCH, only the UESS may be defined.

Examples of the RNTI used to scramble CRC include RA-RNTI, C-RNTI, SPS C-RNTI, temporary C-RNTI, elMTA-RNTI, TPC-PUCCH-RNTI, TPC-PUSCH-RNTI, M-RNTI, P-RNTI, and SI-RNTI.

The RA-RNTI, C-RNTI, SPS C-RNTI, eIMTA-RNTI, TPC-PUCCH-RNTI, and TPC-PUSCH-RNTI are configured from the base station apparatus to the terminal apparatus via higher layer signalling.

The M-RNTI, P-RNTI, and SI-RNTI correspond to a single value. For example, the P-RNTI corresponds to a PCH and a PCCH, and is used to inform changes in paging and system information. The SI-RNTI corresponds to a DL-SCH and a BCCH, and is used to broadcast system information. The RA-RNTI corresponds to a DL-SCH, and is used for a random access response.

The RA-RNTI, C-RNTI, SPS C-RNTI, temporary C-RNTI, elMTA-RNTI, TPC-PUCCH-RNTI, and TPC-PUSCH-RNTI are configured with higher layer signalling.

The M-RNTI, P-RNTI, and SI-RNTI are defined with prescribed values.

The PDCCH together with a CRC scrambled with each RNTI may correspond to a different transport channel and a different logical channel depending on an RNTI value. That is, different information may be indicated depending on the RNTI value.

A single SI-RNTI is used to be addressed in the SIB 1, as well as all the SI messages.

Note that, the RNTI corresponding to the LR may be defined. Further, a DCI format corresponding to an FS 4-1 to an FS 4-3 may be defined. A payload size of a DCI format corresponding to the LR may be defined.

Further, in a case that control information indicating resource allocation and an MCS scheme is transmitted using a control channel and/or a shared channel of the LR cell, a sequence associated with the control information may be scrambled using an associated RNTI, that is, an identifier.

A PHICH is used to transmit an HARQ-ACK (ACK or NACK) in response to uplink transmission (e.g., a PUSCH). The terminal apparatus may retransmit the PUSCH in accordance with contents of the PHICH.

The PCFICH is used to notify the terminal apparatus and the relay station device of the number of OFDM symbols used for the PDCCH. Furthermore, the PCFICH is transmitted in each downlink subframe or in each special subframe.

The PDSCH is used to notify the terminal apparatus of not only downlink data (DL-SCH data, a DL-SCH transport block) but also broadcast information (system information) that is not notified on the PCH or the PBCH, as a layer-3 message. The radio resource allocation information on the PDSCH is indicated with the PDCCH. The PDSCH is allocated in an OFDM symbol different from an OFDM symbol in which the PDCCH is transmitted. That is, the PDSCH and the PDCCH are subjected to Time Division Multiplexing (TDM) within a single subframe. However, the PDSCH and the EPDCCH are subjected to Frequency Division Multiplexing (FDM) within a single subframe.

The PDSCH may also be used to broadcast the system control information.

The PDSCH may also be used as paging, in a case where the network does not learn a cell in which the terminal apparatus is located. That is, the PDSCH may be used to transmit paging information and modification notification of system information.

Moreover, the PDSCH may be used to transmit control information between a terminal apparatus and the network, to such a terminal apparatus having no RRC connection with the network (the terminal apparatus in the idle mode).

The PDSCH may also be used to transmit dedicated control information between a terminal apparatus and the network, to such a terminal apparatus having RRC connection (the terminal apparatus in the connected mode).

The PDSCH is used for transmitting a transport block corresponding to the RNTI added to the PDCCH. For example, the DL-SCH associated with the random access response is mapped to the PDSCH, in which the resource allocation is indicated by the PDCCH along with the CRC scrambled with the RA-RNTI. Further, the PCH associated with the paging information is mapped to the PDSCH, in which the resource allocation is indicated by the PDCCH along with the CRC scrambled with the P-RNTI. Further, the DL-SCH associated with the SIB is mapped to the PDSCH, in which the resource allocation is indicated by the PDCCH along with the CRC scrambled with the SI-RNTI. Further, the DL-SCH associated with the RRC message may be mapped to the PDSCH, in which the resource allocation is indicated by the PDCCH along with the CRC scrambled with the temporary C-RNTI.

The PUCCH is used to make a reception confirmation acknowledgment (Hybrid Automatic Repeat reQuest-ACKnowledgment (HARQ-ACK) or ACKnowledgment/Negative ACKnowledgment (ACK/NACK or ACK/NAK)) for downlink data transmitted on the PDSCH, a downlink CSI report, and an uplink radio resource allocation request (radio resource request, Scheduling Request (SR)). That is, the PUCCH is used to transmit the HARQ-ACK/NACK, the SR, or the CSI report in response to downlink transmission. For the PUCCH, multiple formats are supported according to the type of Uplink Control Information (UCI) such as the HARQ-ACK, the CSI, and the SR to be transmitted. For the PUCCH, a resource allocation method and a transmit power control method are defined for each format. The PUCCH uses one RB in each of two slots of one subframe. That is, the PUCCH includes one RB regardless of the format. Furthermore, the PUCCH may not be transmitted in an UpPTS of the special subframe.

In a case that the PUCCH is transmitted in an SRS subframe, in a PUCCH format to which a shortened format is applied (e.g., formats 1, 1a, 1b, and 3), the last one symbol or two symbols, to which an SRS may possibly be allocated (the last one symbol or two symbols of the second slot in the subframe), is or are to be made empty.

The PUCCH formats 1/1a/1b and PUCCH formats 2/2a/2b may be transmitted in an identical RB. A cyclic shift for the PUCCH formats 1/1a/1b in the RB used for transmitting the PUCCH formats 1/1a/1b and the PUCCH formats 2/2a/2b may be configured individually.

The PUSCH mainly transmits uplink data (UL-SCH data, a UL-SCH transport block) and control data, and may include Uplink Control Information (UCI), such as CSI, an ACK/NACK (HARQ-ACK), and an SR. Moreover, the PUSCH is also used such that the terminal apparatus notifies the base station apparatus of uplink data as well as a layer-2 message and a layer-3 message, which are higher layer control information. In addition, in a similar manner to downlink, the radio resource allocation information on the PUSCH is indicated with the PDCCH (PDCCH along with a DCI format). In a case where the PUSCH is transmitted in an SRS subframe and a PUSCH resource overlaps an SRS bandwidth, the last one symbol or the last two symbols, to which the SRS may possibly be allocated (the last one symbol or two symbols of the second slot of the subframe), is or are to be made empty.

An UpLink Reference Signal (ULRS) includes a DeModulation Reference Signal (DMRS) to be used by the base station apparatus to demodulate the PUCCH and/or the PUSCH, and a Sounding Reference Signal, Sounding Reference Symbol (SRS) to be mainly used by the base station apparatus to estimate/measure an uplink channel state or transmission timing. Further, the SRS includes a Periodic SRS (P-SRS) transmitted periodically in a case that a higher layer parameter for an SRS configuration is configured, and an Aperiodic SRS (A-SRS) transmitted in a case that transmission is requested by the base station apparatus by using an SRS request. Note that the P-SRS is referred to as a trigger type 0 SRS, and the A-SRS is referred to as a trigger type 1 SRS.

The SRS is allocated to the last one symbol or the last two symbols in a subframe. The subframe in which the SRS is possibly transmitted may be referred to as an SRS subframe. The SRS subframe is determined based on a cell-specific subframe configuration and a terminal apparatus-specific subframe configuration. To transmit the PUSCH in a subframe that is set based on a cell-specific subframe configuration, none of the terminal apparatuses in a cell allocate a PUSCH resource to the last symbol in the subframe. To transmit the PUCCH, to which a shortened format is applied, in an SRS subframe set based on a cell-specific subframe configuration, none of the terminal apparatuses in a cell allocate a PUCCH resource in the last symbol in the subframe. However, the shortened format may not be applied depending on the PUCCH format. In such a case, the PUCCH may be transmitted in a normal format (i.e., transmitted with a PUCCH resource allocated to an SRS symbol). To transmit the PRACH, its transmission has a higher priority. In a case that an SRS symbol is arranged in a guard time of the PRACH, the SRS may be transmitted. Note that, the ULRS may be referred to as an uplink pilot channel or a pilot signal. Further, the terminal apparatus, in a case that symbol domain (time domain) extension in which the SRS can be transmitted is configured, based on a higher layer parameter, may allocate the SRS to the extended time domain and transmit.

In a case that a higher layer parameter for the P-SRS is configured, the P-SRS is transmitted based on the configured higher layer parameter. In a case that a higher layer parameter for the A-SRS is configured, whether to transmit the A-SRS is determined, based on a value set in an SRS request requesting transmission of the SRS (A-SRS) included in a DCI format, in a recent SRS subframe after prescribed subframes from a downlink subframe in which the SRS request has been received.

A Physical Random Access CHannel (PRACH) is a channel used to inform (configure) a preamble sequence, and includes a guard time. The preamble sequence is configured such that multiple sequences are sued for notifying the base station apparatus of information. For example, in a case that 64 types of sequences are available, 6-bit information can be provided to the base station apparatus. The PRACH is used by the terminal apparatus as access means to access the base station apparatus (such as an initial access). The PRACH is used to transmit a random access preamble.

The terminal apparatus uses the PRACH to request an uplink radio resource in a case that no PUCCH is configured for an SR or to request, from the base station apparatus, transmission timing adjustment information (also referred to as a Timing Advance (TA) command) demanded for matching the uplink transmission timing with a reception timing window of the base station apparatus, for example. Moreover, the base station apparatus can also request the terminal apparatus to initiate a random access procedure with a PDCCH (referred to as a PDCCH order). The TA command is used commonly among cells belonging to an identical TAG.

Also in the LR cell, the above-described various physical channels/physical signals playing similar roles may be defined. Further, some of the above-described physical channels and/or physical signals may be defined as an identical channel. The above-described various physical channels/physical signals playing similar roles may be defined as a single piece of information/data transmitted/mapped using a channel.

Next, cell search according to the present embodiment will be described.

In LTE, the cell search is a procedure in which the terminal apparatus performs time frequency synchronization on a certain cell and detects a cell ID of the cell. EUTRA cell search supports a whole transmission bandwidth capable of being extended/reduced corresponding to at least 72 subcarriers. The EUTRA cell search is performed in a downlink based on a PSS and an SSS. The PSS and the SSS are transmitted using 72 subcarriers at centers of bandwidths of a first subframe and a sixth subframe of each radio frame. Neighboring cell search is, as an initial cell search, performed based on an identical downlink signal.

In the LR, in a case of standalone type communication, cell search similar to the above may be performed.

Next, physical layer measurement according to the present embodiment will be described.

In LTE, the physical layer measurement includes: measurement in the EUTRAN of an intra-frequency and an inter-frequency (RSRP/RSRQ); measurement for a time difference between reception and transmission by the terminal apparatus, and a time difference between reference signals used for positioning of the terminal apparatus (RSTD); inter-RAT (EUTRAN-GERAN/UTRAN) measurement; inter-system (EUTRAN-non 3GPP RAT) measurement; and the like. Note that the physical layer measurement is performed for supporting mobility. Further, the EUTRAN measurement includes measurement performed by the terminal apparatus in the idle mode and measurement performed by the terminal apparatus in the connected mode. The terminal apparatus performs the EUTRAN measurement at a proper measurement gap and is in synchronization with the cell in which the EUTRAN measurement is performed. Note that the above measurement may be referred to as terminal apparatus measurement as the measurement is performed in the terminal apparatus.

The terminal apparatus may support at least two physical amounts (RSRP, RSRQ) for measurement in the EUTRAN. Additionally, the terminal apparatus may support a physical amount associated with an RSSI. The terminal apparatus may perform corresponding measurement based on a parameter for a physical amount configured as a higher layer parameter.

The physical layer measurement is performed for supporting the mobility. For example, the physical layer measurement includes: measurement in the EUTRAN of an intra-frequency and an inter-frequency (RSRP/RSRQ); measurement for a time difference between reception and transmission by the terminal apparatus, and a time difference between reference signals used for positioning of the terminal apparatus (RSTD); an inter-RAT (EUTRAN-GERAN/UTRAN) measurement; an inter-system (EUTRAN-non 3GPP RAT) measurement; and the like. For example, the physical layer measurement includes measurement for intra- and inter-frequency handover, measurement for inter-RAT handover, timing measurement, measurement for the RRM, and measurement for positioning in a case that the positioning is supported. Note that, the measurement for inter-RAT handover is defined in handover supports for GSM (trade name), UTRA FDD, UTRA TDD, CDMA2000, 1xRTT, CDMA2000 HRPD, and IEEE802.11. Further, the EUTRAN measurement is used for supporting the mobility. Further, the EUTRAN measurement includes measurement performed by the terminal apparatus in the idle mode and measurement performed by the terminal apparatus in the connected mode. For example, the RSRP and the RSRQ may be measured, regardless of a mode of the terminal apparatus, for each of the intra-frequency and the inter-frequency. The terminal apparatus performs the EUTRAN measurement at a proper measurement gap and is in synchronization with the cell in which the EUTRAN measurement is performed.

The physical layer measurement includes measurement of radio performance by the terminal apparatus and the base station apparatus and a report to a higher layer in a network.

The RSRP is defined, in a carrier frequency and a measurement bandwidth (measurement frequency bandwidth) configured in a measurement object configuration, as a linear average value of resource element power transmitting a CRS. A resource R₀ to which the CRS is mapped is used for determining the RSRP. In a case that the terminal apparatus can correctly detect that R₁ is available, R₁ may be used in addition to R₀ for determining the RSRP. Note that, R₀ denotes a resource (resource element) of an antenna port 0 of the CRS, and R₁ denotes a resource (resource element) of an antenna port 1 of the CRS. Power of each of the resource elements may be determined from energy received among useful portions of a symbol without a CP.

Note that, a resource and a radio resource may be synonymous with a resource element, may be synonymous with a resource block, or may be a resource element and/or a resource block in a subframe/slot and in a bandwidth.

The terminal apparatus, in a case that a higher layer indicates measurement based on a DS, measures RSRP in a subframe in a configured DS occasion (in the subframe constituting the DS occasion). The terminal apparatus, in another subframe (that is, a subframe other than the DS occasion), assuming that presence of the CRS can be correctly detected, may use a resource element of the CRS in the subframes for determining the RSRP. That is, assuming that the measurement of the RSRP is indicated using the CRS in the DS, the terminal apparatus may measure the RSRP using a resource of the CRS mapped to a subframe in the DS (in the DS occasion) and a subframe outside the DS (outside the DS occasion).

Note that, a reference point for the RSRP is preferably an antenna connector of the terminal apparatus. Assuming that reception diversity is used by the terminal apparatus, a reported value will not be lower than RSRP corresponding to one of individual diversity branches. Further, the number of resource elements in a measurement bandwidth and a measurement cycle used for the measurement of the RSRP may be determined by the terminal apparatus, as long as the number satisfies necessary measurement precision. Further, power of each resource element is determined from energy received among effective portions of a symbol without a CP. Note that, a unit of the RSRP is dBm or W (or mW).

The RSRQ is a power ratio of the RSRP and the RSSI in the number of resource blocks equivalent to the measurement bandwidth of the RSSI. Note that, the measurement bandwidths of the RSRP and the RSSI are constituted of an identical set of resource blocks. Note that, an RSSI and a histogram used for calculating the RSRQ or a measured and reported RSSI may be individually measured.

The RSSI is obtained in a specific OFDM symbol in a measurement bandwidth and a measurement subframe, and includes linearly averaged total reception power. The measurement bandwidth is the number of resource blocks N by the terminal apparatus from all sources. Further, all the sources may include a serving cell and a non-serving cell of a shared channel, neighboring channel interference, and thermal noise. That is, the RSSI may be measured including interference power and noise power.

The RSSI, unless indicated by a higher layer, is measured from an OFDM symbol including a reference symbol for the antenna port 0 of a measurement subframe. In a case that the higher layer indicates to perform RSRQ measurement by using all OFDM symbols, the RSSI is measured from all the OFDM symbols of a DL portion of the measurement subframe (downlink subframe and DwPTS). In a case that the higher layer indicates to perform the RSRQ measurement by using a specific OFDM symbol, the RSSI is measured from all the OFDM symbols of the DL portion of the indicated subframe (downlink subframe and DwPTS). That is, the OFDM symbol used for measuring the RSSI is determined based on the indication/configuration from the higher layer.

In a case that the higher layer indicates measurement based on the DS, the RSRQ is measured from all the OFDM symbols of a DL portion of a subframe in a configured DS occasion. A reference point for the RSRQ is an antenna connector of the terminal apparatus. Assuming that reception diversity is used by the terminal apparatus, a reported value will not be lower than RSRQ corresponding to any one of individual diversity branches. Note that a unit of the RSRQ is dB.

The RSRP may be referred to as CSI-RSRP, in a case of being performed using a resource of CSI-RS. Note that, the CSI-RSRP is defined as a linear average value in resource element power transmitting the CSI-RS in a measurement bandwidth of a subframe in a configured DS occasion. A resource R₁₅ (a resource of an antenna port 15) to which the CSI-RS is mapped is used for determining the CSI-RSRP. That is, the terminal apparatus, in a case of measuring the CSI-RSRP, measures power in a resource to which the R₁₅ is mapped, and performs linear averaging. Further, a reference point for the CSI-RSRP is an antenna connector of the terminal apparatus. Assuming that reception diversity is used by the terminal apparatus, a reported value will not be lower than a CSI-RSRP value corresponding to any one of individual diversity branches. The number of resource elements in a measurement bandwidth and a measurement cycle used for determining the CSI-RSRP, may be implementation of the terminal apparatus, as long as the number satisfies necessary measurement precision. That is, the terminal apparatus, in order to satisfy the measurement precision, may select and measure a resource element in the measurement cycle and the measurement bandwidth.

In a case that a measurement result of a physical layer (first layer) is outputted to a higher layer, an average in a frequency direction (a frequency resource in a measurement bandwidth in one subframe/one slot (or per one resource block) and/or a time average in a subframe/slot (a time resource in a measurement bandwidth in one subframe/one slot) may be filtered in the physical layer. The filtering in the physical layer (first layer) is referred to as a first layer filtering. For example, an average of multiple input values, a weighted average, and an average following channel identification may be applied to the filtering in the physical layer. Additionally, the measurement result filtered in the physical layer may further be filtered in a higher layer (third layer, RRC layer). The filtering in the higher layer (third layer) is referred to as a third layer filtering. In the third layer filtering, each measurement result inputted from the physical layer is calculated based on a filter coefficient. The filter coefficient is configured as a higher layer parameter. The filter coefficient may be configured corresponding to each of the RSRP, the RSRQ, and the CSI-RSRP. The filter coefficient may be configured as one of parameters of a physical amount configuration. Assuming that a higher layer parameter for the RSSI measurement is configured in the terminal apparatus, a filter coefficient for the RSSI may be configured. Further, the filter coefficient for the RSSI may be configured as one of parameters of the physical amount configuration. Note that, the filter coefficient may be referred to as a filtering coefficient.

An LAA cell, after performing Listen Before Talk (LBT), starts communication in some cases. In the LBT, before the base station apparatus and/or the terminal apparatus transmits (communicates) in a frequency corresponding to the LAA cell, energy (or a signal) such as interference power (an interference signal, a signal from another terminal apparatus/base station apparatus, reception power, a receive signal, noise power, a noise signal) is detected, and based on whether a value of the energy (a power value of a signal) exceeds a prescribed threshold, whether the frequency is in an idle sate (a vacant state (clear state), an uncrowded state, a state of not being occupied by another signal, a state in which no other signal exists) or in a busy state (a non vacant state, a crowded state, a state of being occupied by another signal, a state in which another signal exists) is determined (identified, detected). In a case that, based on the LBT, the frequency is determined to be in the idle state, the base station apparatus or the terminal apparatus belonging to the LAA cell can transmit a signal at prescribed timing. Further, in a case that, based on the LBT, the frequency is determined to be in the busy state, the base station apparatus or the terminal apparatus belonging to the LAA cell does not transmit a signal at the prescribed timing. Note that measurement for the LBT may be referred to as Clear Channel Assessment (CCA). That is, in the present invention, the LBT may be synonymous with the CCA.

Next, an example of the CCA will be described.

A first CCA determines whether a channel (frequency or cell) is clear by comparing a value of detected energy with a prescribed threshold in a certain measurement duration (a duration in which the LBT and/or the CCA is performed). The first CCA may be referred to as Energy Detection (ED) type CCA.

A second CCA determines whether a channel is clear based on whether a signal to which a prescribed modulation scheme or a sequence generation method is applied is detected in a certain measurement duration. The second CCA may be referred to as Carrier Sense (CS) type CCA.

A third CCA determines whether a channel is clear based on whether a signal to which a prescribed modulation scheme or a sequence generation method (a prescribed coding modulation scheme) is applied is detected and whether a value of energy of the detected signal exceeds a prescribed threshold, in a certain measurement duration. The third CCA may be referred to as hybrid type CCA.

The terminal apparatus and/or the base station apparatus belonging to the LAA cell, in a certain measurement duration, in a case that a signal for the LAA is detected, may determine that a channel is clear and transmit the signal.

Aside from the first CCA to the third CCA described above, there are Initial CCA (ICCA, LBT category 2, single sensing, Frame-Based Equipment (FBE)) performing a CCA check only once, and Extended CCA (ECCA, LBT category 3 or 4, multiple sensing, Load-Based Equipment (LBE)) performing the CCA check for a prescribed number of times. The ICCA and the ECCA may be used in combination with one of the first CCA to the third CCA. The ICCA and the ECCA indicate a duration for the CCA check (that is a measurement duration), and the first CCA to the third CCA indicate criteria for determining whether a channel is clear (that is, a threshold, a reception power (energy) value). A measurement duration may be configured/defined for each of the ICCA and the ECCA. The ICCA is constituted of a single measurement duration, and the ECCA is constituted of multiple measurement durations. A single measurement duration may be referred to as a single measurement slot. For example, a length (size) of a measurement slot of the ICCA may be 34 microseconds. Further, a length of a measurement slot of the ECCA may be 9 microseconds. Further, in the channel (frequency, cell), after transiting from the busy state to the idle state, a duration for the CCA check may be referred to as a defer duration. A length of the duration may be 34 microseconds. In a case that the terminal apparatus performs the CCA (LBT), which CCA is used may be configured via higher layer signalling from the base station apparatus. A duration for the CCA check (CCA check duration) may be referred to as an LAA collision window. A size of the collision window may be defined in an ECCA slot. Further, the size of the collision window may be changed between ECCA slots of X and Y, by backoff. Further, a value of the backoff may be changed dynamically or semi-statically. That is, the value of the backoff may be configured as a single field in a DCI format, or may be configured as a higher layer parameter.

A duration for the CCA check may be referred to as an LAA collision window. A size of the collision window may be defined in an ECCA slot. Further, the size of the collision window may be changed between ECCA slots of X and Y, by backoff. Further, a value of the backoff may be changed dynamically or semi-statically. That is, the value of the backoff may be configured as a single field in the DCI format, or may be configured as a higher layer parameter.

In a case that a parameter for the LBT is configured for a certain cell of the LR, the terminal apparatus and/or the base station apparatus performs a channel access procedure based on the LBT and then transmits.

Next, an uplink transmit power control method according to the present embodiment will be described.

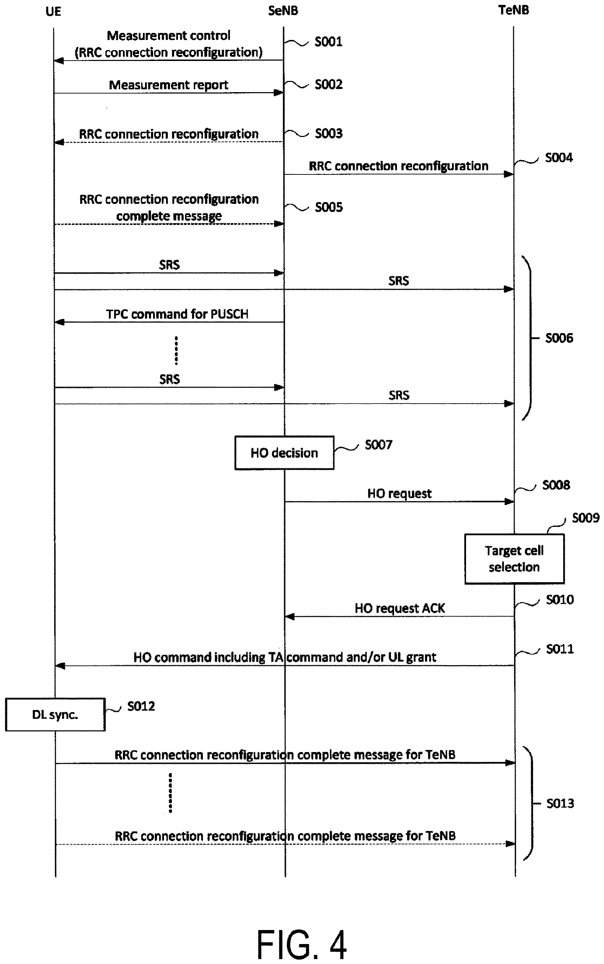

First, a handover procedure according to the present embodiment will be described. FIG. 4 is a sequence diagram illustrating an example of the handover procedure according to the present embodiment.
(Step S001) A source base station apparatus configures parameters necessary for a measurement procedure for a terminal apparatus. That is, the source base station apparatus controls measurement for the terminal apparatus. The parameters necessary for the measurement procedure may include a parameter for Radio Resource Management (RRM) measurement (parameter for a measurement configuration), and may include a list of cells as measurement objects. The list of cells may include a cell managed by a target base station apparatus. Note that, in a case of indicating cell measurement with a different frequency band, the source base station apparatus may configure a parameter related to a measurement gap for the terminal apparatus. Here, the source base station apparatus is a base station apparatus managing a cell in which RRC connection with the terminal apparatus is established. The target base station apparatus is a base station apparatus managing a cell (target cell) that the terminal apparatus targets for a handover destination. The parameters necessary for the measurement procedure may be RRC-signalled to the terminal apparatus. The parameters necessary for the measurement procedure may be included in an RRC connection reconfiguration. Note that these parameters may be transmitted from the base station apparatus to the terminal apparatus as a DL-DCCH message.
Further, mobility control information, and a dedicated radio resource configuration may be included in the RRC connection reconfiguration in addition to information for the measurement configuration. The mobility control information may include a Physical layer Cell Identity (PCI) for a target cell, a carrier frequency and a carrier bandwidth of the target cell, a shared radio resource configuration in the cell, a dedicated random access channel configuration for each terminal apparatus, and an identifier of the terminal apparatus.
(Step S002) The terminal apparatus reports a measurement result to the source base station apparatus. Note that, the terminal apparatus may measure cells not included in the list provided from the source base station apparatus, and report measurement results thereof to the source base station apparatus. Further, among the cells not included in the list, a cell managed by the target base station apparatus may be included.
(Step S003) The source base station apparatus may transmit higher layer signalling (RRC signaling, RRC connection reconfiguration) including information on an SRC configuration to the terminal apparatus. The information on the SRS configuration may be transmitted in Step S001. In that case, Step S003 may be skipped.
(Step S004) The source base station apparatus and the target base station apparatus share information on the SRS configuration configured for the terminal apparatus via an X2 interface as a backhaul link. The target base station apparatus measures a communication state/condition with the terminal apparatus and uplink timing based on the SRS configuration.
(Step S005) In a case that the RRC connection reconfiguration is transmitted in Step S003, the terminal apparatus transmits an RRC connection reconfiguration complete message indicating that the higher layer parameter transmitted from the source base station apparatus has been configured/updated, to the source base station apparatus. In a case that S003 is skipped, S005 may also be skipped.
(Step S006) The terminal apparatus transmits an SRS in a prescribed cell based on a parameter for the SRC configuration. The source base station apparatus and the target base station apparatus measure the SRS transmitted from the terminal apparatus based on the shared SRS configuration, and evaluate a communication state between the terminal apparatus and the base station apparatus and uplink timing. The source base station apparatus or the target base station apparatus may control SRS transmit power of the terminal apparatus by using a TPC command, until power of the SRS is obtained such that the source base station apparatus and the target base station apparatus can appropriately perform measurement.
(Step S007) The source base station apparatus determines whether to perform a handover to the target base station apparatus or a cell managed by the target base station apparatus, based on a measurement report and information on the RRM. Further, the source base station apparatus may determine a target base station apparatus based on the communication state and the uplink timing based on the SRS evaluated in the target base station apparatus. Note that, the target base station apparatus may be more than one. Note that, the information on the RRM may be the parameter necessary for the measurement procedure described in Step S001.
(Step S008) The source base station apparatus, in a case of the handover, transmits a handover request message to the target base station apparatus as the handover destination.
(Step S009) The target base station apparatus selects a target cell from cells the target base station apparatus manages, at least based on the SRS measurement result and the handover request message.
(Step S010) The target base station apparatus, in a case of selecting the target cell, transmits an ACK in response to the handover request to the source base station apparatus. The target base station apparatus, in a case of being unable to select a target cell, transmits a NACK in response to the handover request.
(Step S011) The target base station apparatus transmits a HandOver command (HO command) to the terminal apparatus via the source base station apparatus. Note that, the HO command may include various higher layer parameters necessary for RRC connection to the target cell. The higher layer parameters may include a T304 as a timer indicating handover failure at expiration, C-RNTI given to a terminal apparatus in the target cell, various pieces of configuration information on the target cell, and a Timing Advance (TA) value measured by the target base station apparatus. The various pieces of configuration information on the target cell may include a Physical layer Cell Identity (PCI), and a parameter associated with a carrier frequency as a central frequency, a parameter for an MAC layer configuration, and a parameter for a radio frame number.
(Step S012) The terminal apparatus, in a case of receiving the HO command, based on the parameter for the various configurations for the target cell, performs downlink synchronization of the target cell. The terminal apparatus may acquire information necessary for the downlink synchronization (e.g., PCI) by using a synchronization signal (PSS, SSS), a CRS, and a PBCH.
(Step S013) The terminal apparatus, based on a TA command and an uplink grant included in the HO command, transmits a PUSCH including an RRC connection reconfiguration complete message. The terminal apparatus, in a case that the terminal apparatus does not receive a response from the target base station apparatus for a prescribed duration, may retransmit the PUSCH including the RRC connection reconfiguration complete message. Based on the uplink grant included in the HO command, resource allocation and power adjustment of the PUSCH may be performed. Note that, the HO command may include only one of the TA command and the uplink grant. In a case that the HO command does not include both the TA command and the uplink grant, or in a case that a handover procedure using a random access preamble based on the HO command is indicated, the terminal apparatus may perform the handover procedure using the random access preamble. In a case of performing the handover procedure using the random access preamble, an initial value of a power control adjustment value used for transmit power of the PUSCH including the RRC connection reconfiguration complete message may be set based on parameters for the number of transmissions of the random access preamble and for ramp up, that is, may be set to a prescribed value.

The target base station apparatus, in a case of PUSCH reception failure, may transmit a physical channel (PHICH, PDCCH, PDSCH) including information corresponding to the NACK to the terminal apparatus. The terminal apparatus, in a case of receiving the physical channel (PHICH, PDCCH, PDSCH) including the information corresponding to the NACK, may retransmit the corresponding PUSCH.

The terminal apparatus, in a case that the number of retransmissions of the PUSCH including the RRC connection reconfiguration complete message exceeds a prescribed number (the maximum number of transmissions), or in a case that an ACK for the PUSCH including the RRC connection reconfiguration complete message cannot be detected for a prescribed duration, may recognize handover failure to the target cell. Note that, the number of retransmissions may include an initial transmission.

Next, transmit power control of an SRS according to the present embodiment will be described.

Transmit power of an SRS in a certain subframe i of a certain serving cell c is set based on, at least a shared parameter (PO_NOMINAL_PUSCH) and a dedicated parameter (PO_UE_PUSCH) according the transmit power of the PUSCH, a dedicated parameter (PSRS_OFFSET) specific to the transmit power of the SRS, a power control adjustment value based on a transmit power control command (TPC command) for PUSCH transmission of the subframe i, a transmission bandwidth (the number of resource blocks, the number of resource elements) of the SRS, a path loss (PL) value based on a downlink reference signal, and a channel compensation coefficient (α). Note that, the transmit power of the SRS is controlled so as not to exceed a maximum output power calculated in the terminal apparatus. A shared parameter is a parameter commonly configured among terminal apparatuses in a cell, and a dedicated parameter is a parameter configured specific to a terminal apparatus in a cell.

The shared parameter and the dedicated parameter according the transmit power of the PUSCH, the dedicated parameter specific to the transmit power of the SRS, the power control adjustment value based on the TPC command for the PUSCH transmission of the subframe i, the transmission bandwidth (the number of resource elements) of the SRS, the path loss value based on the downlink reference signal, and the channel compensation coefficient may be configured for each cell in a case that multiple cells are configured. Additionally, the dedicated parameter specific to the transmit power of the SRS may be configured for each trigger type. Additionally, the shared parameter and the dedicated parameter according the transmit power of the PUSCH, and the power control adjustment value based on the TPC command for the PUSCH may be configured for each subframe set in a case that multiple subframe sets are configured for uplink power control.

Next, transmit power control of a PUSCH including an RRC connection reconfiguration complete message according to the present embodiment will be described.

In a case that a dedicated parameter according to the transmit power of the PUSCH is included in a higher layer parameter included in the RRC connection reconfiguration complete message, and in a case that a value of the dedicated parameter according to the transmit power of the PUSCH is changed, the terminal apparatus resets accumulation of a power control adjustment value based on a TPC command for the PUSCH transmission. In this case, an uplink grant included in an HO command may not necessarily include the TPC command for the PUSCH. Further, in this case, the uplink grant included in the HO command may include the TPC command for the PUSCH, or may be set to 0 dB. Note that, the RRC connection reconfiguration complete message may be transmitted not only in a case of receiving an RRC connection reconfiguration, but also in a case of receiving an RRC connection configuration (initial configuration, configuration at a time of initial connection establishment).

Note that, although as exception processing, the dedicated parameter according to the transmit power of the PUSCH is included in the HO command, in a case that a value thereof is not changed, whether to hand over the power control adjustment value based on a TPC command used for setting the transmit power of the SRS to the transmit power of the PUSCH including the RRC connection reconfiguration complete message may be determined based on a higher layer parameter included in the HO command. The terminal apparatus, in a case that hand over of the power control adjustment value is indicated as not needed, may reset accumulation of the power control adjustment value based on the TPC command for the PUSCH. In this case, an uplink grant included in an HO command may not necessarily include the TPC command for the PUSCH. Note that, the terminal apparatus, in a case that the higher layer parameter indicating whether to hand over is not included in the HO command, may reset the accumulation of the power control adjustment value based on the TPC command for the PUSCH.

In the target base station apparatus, in a case that the power control adjustment value based on the TPC command for the PUSCH used for setting the transmit power of the measured SRS is handed over to the transmit power of the PUSCH including the RRC connection reconfiguration complete message, the uplink grant included in the HO command may include the TPC command for the PUSCH. The target base station apparatus may adjust the transmit power of the PUSCH including the RRC connection reconfiguration complete message by using the TPC command.

Note that, as an initial value of the reset power control adjustment value, 0 or a value configured by higher layer signalling (that is, a prescribed value) may be applied.

The terminal apparatus, in a case of transmitting the PUSCH including the RRC connection reconfiguration complete message to the target base station apparatus, and assuming that an ACK/NACK for the PUSCH cannot be detected in a prescribed duration, may ramp up the transmit power of the PUSCH and retransmit the PUSCH. The ACK/NACK for the PUSCH including the RRC connection reconfiguration complete message may be notified using a PHICH or a PDCCH. Here, the ramp-up of the transmit power of the PUSCH refers to increase in transmit power based on the number of transmissions. An increase amount (increment) may be based on a prescribed parameter, or may be defined in advance.

A higher layer parameter used to ramp up the transmit power of the PUSCH may be included in the HO command, or a higher layer parameter used to ramp up transmit power of a PRACH may be applied. Further, the higher layer parameter used to ramp up the transmit power of the PUSCH may be included in mobility control information, may be included in the RRC connection reconfiguration, or may be included in a configuration for uplink power control.

A higher layer parameter used to ramp up the transmit power of the PUSCH may be included in the HO command, or a higher layer parameter used to ramp up transmit power of a PRACH may be applied. Which parameter is to be used may be defined in advance.

Assuming that the transmit power of the PUSCH ramped up based on the number of transmissions or the number of retransmissions exceeds a maximum output power configured in the terminal apparatus, the terminal apparatus may not necessarily ramp up the transmit power of the PUSCH in subsequent retransmissions.

The terminal apparatus, in a case that an ACK/NACK for the PUSCH including the RRC connection reconfiguration complete message is detected from a PDCCH in a prescribed duration, and assuming that a TPC command is included in the PDCCH, may adjust the transmit power of the PUSCH using the TPC command.

The terminal apparatus, in a case that the NACK for the PUSCH including the RRC connection reconfiguration complete message is detected from a PHICH in a prescribed duration, may retransmit the PUSCH without performing power compensation, may determine whether to ramp up based on the higher layer parameter included in the HO command, or may adjust power based on the TPC command for the PUSCH included in a DCI format including information indicating the NACK.

The terminal apparatus, in a case that an ACK for the PUSCH including the RRC connection reconfiguration complete message cannot be detected in a prescribed duration, recognizes handover failure to a target cell. The terminal apparatus recognizing the handover failure may perform a handover procedure by random access. That is, the terminal apparatus, in a case of recognizing failure in the above-described handover procedure (a handover procedure described in FIG. 4), may transit to a handover procedure using a random access preamble (that is, PRACH).

The terminal apparatus, in a case of transiting to the handover procedure using the random access preamble, may set an initial value of transmit power of the random access preamble to the transmit power of the PUSCH immediately before the handover failure.

Further, the terminal apparatus, in the case of transiting to the handover procedure using the random access preamble, may set an initial value of the number of transmissions of the random access preamble used for the transmit power of the random access preamble (PRACH) to the number of retransmissions of the PUSCH. That is, the terminal apparatus may set the transmit power of the PRACH based on the number of retransmissions of the PUSCH.

Further, the terminal apparatus may perform transmit power control of the PUSCH in the above-described handover procedure, and transmit power control of the PRACH in the handover procedure using the random access preamble separately. That is, various parameters used for the transmit power of the PUSCH and various parameters used for the transmit power of the PRACH may be separately configured.

Assuming that the handover procedure described in FIG. 4 is a first handover procedure, and the handover procedure using the random access preamble performed after failure of the first handover procedure is a second handover procedure, whether to perform the second handover procedure may be determined based on the higher layer parameter included in the HO command. Further, whether to hand over a parameter for power control used in the first handover procedure to a parameter for power control in the second handover procedure or not may be determined based on the higher layer parameter included in the HO command.

In a case that multiple subframe sets are configured for an uplink, each subframe set may be associated with a source base station apparatus and a target base station apparatus. For example, a subframe set 1 may be associated with a source base station apparatus and a subframe set 2 may be associated with a target base station apparatus. For example, uplink transmit power in the subframe set 1 corresponding to the target base station apparatus may be controlled separately from uplink transmit power in the subframe set 2 corresponding to the source base station apparatus. A single subframe does not belong to multiple subframe sets simultaneously. In a case that three or more subframe sets are configured, the subframe set corresponding to each of two or more target base station apparatuses may be configured. By configuring multiple subframe sets for a single cell, uplink transmit power control corresponding to different base station apparatuses can be performed without configuring multiple cells.

In a case that a subframe is associated with a target base station apparatus, an HO command may include information indicating to which target base station apparatus a power control adjustment value to be used corresponds. That is, in the case that the subframe set is associated with the target base station apparatus, whether to hand over a power control adjustment value corresponding to the subframe set as an initial value of a power control adjustment value used for the transmit power of the PUSCH including the RRC connection reconfiguration complete message may be determined based on a prescribed higher layer parameter included in the HO command or a higher layer configuration. For example, an uplink power control adjustment value in the subframe set 1 may be controlled separately from an uplink power control adjustment value in the subframe set 2.

The HO command may include a higher layer parameter indicating one or multiple subframe sets.

Uplink transmission timing in the subframe set 1 corresponding to the target base station apparatus may be controlled separately from uplink transmission timing in the subframe set 2 corresponding to the source base station apparatus. In a case that a first uplink transmission in a subframe belonging to the subframe set 2 corresponding to the target base station apparatus overlaps with a second uplink transmission in a subframe belonging to the subframe set 2 corresponding to the source base station apparatus, of the first uplink transmission and the second uplink transmission, one of the uplink transmissions in the overlapped portion may not necessarily be performed.

The one of the uplink transmissions may be (i) the first uplink transmission corresponding to the target base station apparatus, (ii) the second uplink transmission corresponding to the source base station apparatus, (iii) uplink transmission that starts earlier, of the first uplink transmission and the second uplink transmission, or (iv) uplink transmission that starts later, of the first uplink transmission and the second uplink transmission.

The uplink transmission timing in the subframe set 1 corresponding to the target base station apparatus may be given based on the uplink transmission timing in the subframe set 2 corresponding to the source base station apparatus. The uplink transmission timing in the subframe set 2 corresponding to the source base station apparatus may be given based on the uplink transmission timing in the subframe set 1 corresponding to the target base station apparatus.

A communicable range (communication area) at each frequency controlled by a base station apparatus is regarded as a cell. Here, the communication area covered by the base station apparatus may be different in size and shape for each frequency. Moreover, the covered area may be different for each frequency. A radio network, in which cells having different types of base station apparatuses or different cell radii are located in a mixed manner in the area with the same frequency and/or different frequencies to form a single communication system, is referred to as a heterogeneous network.

A terminal apparatus has no connection with any network, for example, immediately after being powered on (e.g., in a case of activation). Such a state with no connection is referred to as an idle mode (RRC_IDLE). To perform communication, the terminal apparatus in the idle mode needs to establish a connection with any network. That is, the terminal apparatus needs to be in a connected mode (RRC_CONNECTED). Here, a network may include a base station apparatus, an access point, a network server, a modem, and the like that belong to the network.

Then, to perform communication, the terminal apparatus in the idle mode performs Public Land Mobile Network (PLMN) selection, cell selection/re-selection, location registration, and manual selection of a Closed Subscriber Group (CSG) cell, for example.

In a case that the terminal apparatus is powered on, a PLMN is selected by a Non-Access Stratum (NAS). For the selected PLMN, associated Radio Access Technology (RAT) is set. The NAS provides a list of corresponding PLMNs, in a case of being available, so that an access stratum (AS) uses the list for the cell selection/re-selection.

In the cell selection, the terminal apparatus searches for a suitable cell in the selected PLMN, and selects a cell (a serving cell) that provides available services. Furthermore, the terminal apparatus tunes to its control channel. Such selection is referred to as camp on a cell.

The terminal apparatus, in a case of being necessary, registers its presence (information on a selected cell or information on a tracking area) in the tracking area of the selected cell, as an outcome of successful location registration by which the selected PLMN becomes a registered PLMN, using a NAS registration procedure.

After finding a more suitable cell, the terminal apparatus re-selects the cell according to cell re-selection criteria, and camps on the cell. Unless a new cell is included in a tracking area in which the terminal apparatus is registered, location registration for the new cell is performed.

In a case of being necessary, the terminal apparatus searches for a PLMN with a higher priority at regular time intervals, and searches for a suitable cell in a case that another PLMN is selected by the NAS.

Searching for available CSGs may be triggered by the NAS to support manual CSG selection.

In a case of being out of a coverage area of the registered PLMN, the terminal apparatus may allow a user to configure either automatic selection (automatic mode) of a new PLMN or manual selection (manual mode) manually selecting which PLMNs are available. However, in a case of receiving a service that does not need registration, the terminal apparatus may not necessarily perform such registration.

In a case that the terminal apparatus is unable to find a suitable cell to camp on or the location registration fails, the terminal apparatus attempts to camp on a cell, regardless of the PLMN identifier, and becomes a "limited service" state. Here, a limited service includes an emergency call, the ETWS, and the CMAS, in a cell satisfying a certain condition. On the other hand, a normal service is provided for public use in a suitable cell. An operator-specific service and the like are also provided.

In a case that the NAS indicates the start of a Power Saving Mode (PSM), an Access Stratum (AS) configuration is maintained and all the timers in operation continue to operate, but the terminal apparatus may not perform an idle mode task (e.g., PLMN selection, cell selection/re-selection, and the like). In a case that a certain timer expires with the terminal apparatus being in the PSM, whether the last process at the end of the PSM is to be performed or a corresponding process is to be immediately performed depends on an implementation of the terminal apparatus. In a case that the NAS indicates the end of the PSM, the terminal apparatus performs all the idle mode tasks.

The terminal apparatus operates by regarding the inside of a cell as a communication area. In a case that the terminal apparatus moves from a cell to another cell, the terminal apparatus moves to another suitable cell through a cell selection/re-selection procedure at the time of having no connection (in RRC_IDLE, in an idle mode, in no communication) or through a handover procedure at the time of having a connection (in RRC_CONNECTED, in a connected mode, in communication). A suitable cell in general indicates a cell that is determined that access from the terminal apparatus is not prohibited based on information specified by the base station apparatus, and that has a downlink reception quality satisfying a prescribed condition.

In PLMN selection, the terminal apparatus reports available PLMNs to the NAS, in accordance with a request from the NAS or autonomously. During the PLMN selection, a specific PLMN can be selected either automatically or manually, based on a list of PLMN identifiers in priority. Each PLMN in the list of PLMN identifiers is identified by a PLMN identifier. In system information on a broadcast channel, the terminal apparatus can receive one or more PLMN identifiers in a certain cell. A result of the PLMN selection performed by the NAS may be indicated by an identifier of the selected PLMN.

In response to the request from the NAS, the AS searches for available PLMNs and reports the available PLMNs to the NAS.

In a case of the EUTRA, to find available PLMNs, the terminal apparatus scans all RF channels in a EUTRA operating band corresponding to the capability information on the terminal apparatus. As for each carrier (component carrier), the terminal apparatus searches for the strongest cell and reads the system information to find a PLMN, to which the cell belongs. The terminal apparatus can read one or some PLMN identifiers in the strongest cell, and each PLMN that has been found is reported to the NAS, as a PLMN having a higher quality. Note that a criterion for the PLMN having a higher quality includes a case where an RSRP value measured of an EUTRA cell is equal to or higher than a prescribed value (e.g., -110 dBm). Here, the strongest cell means, a cell indicating the best (highest) value in the measurement value of RSRP or RSRQ, for example. That is, the strongest cell can be a most suitable cell in the communication of the terminal apparatus.

Although the PLMN that has been found does not satisfy the criterion, in a case of being readable, a PLMN identifier is reported together with an RSRP value to the NAS. The measurement values reported to the NAS are the same as each PLMN found in a single cell.

Searching for PLMNs can be stopped by a request from the NAS. The terminal apparatus may optimize the PLMN search by using the stored information (e.g., information on a carrier frequency and cell parameter from reception measurement control information elements, and the like).

Once the terminal apparatus selects a PLMN, the cell selection procedure is performed to select a suitable cell, of the PLMN, on which the terminal apparatus camps.

In a case where a CSG-ID is provided by the NAS, as a part of the PLMN selection, the terminal apparatus searches for an acceptable or suitable cell belonging to the provided CSG-ID to camp on the cell. In a case that the terminal apparatus no longer camps on a cell of the provided CSG-ID, the AS informs the NAS of such information.

In the cell selection/re-selection, the terminal apparatus performs measurement for the cell selection/re-selection.

The NAS can control the RAT in which the cell selection is performed, by indicating the RAT associated with the selected PLMN or by maintaining a list of prohibited registration areas and a list of equivalent PLMNs, for example. The terminal apparatus selects a suitable cell, based on idle mode measurement and the cell selection criterion.

To accelerate the cell selection process, the information stored for some types of RAT may be utilized in the terminal apparatus.

In a case that a terminal apparatus camps on a cell, the terminal apparatus searches for a better cell according to the cell re-selection criterion. In a case that a better cell is found, such a cell is selected. A cell change may imply a change of RAT. Here, a better cell denotes a cell more suitable for communication. For example, the better cell means a cell having higher communication quality (e.g., good results in measurement values of RSRP and RSRQ in a case of comparing among cells).

In a case that the cell selection/re-selection is changed in the received system information on the NAS, information is supplied to the NAS.

In a normal service, the terminal apparatus camps on a suitable cell and tunes to the control channel of the cell. This allows the terminal apparatus to receive the system information from the PLMN. Furthermore, the terminal apparatus can receive, from the PLMN, registration area information such as tracking area information. Furthermore, the terminal apparatus can receive NAS information from another AS. After the registration, the terminal apparatus can receive the paging and notification messages from the PLMN. Moreover, the terminal apparatus can initiate a transition to the connected mode.

The terminal apparatus uses one of the two cell selection procedures. Initial cell selection demands no preliminary knowledge (stored information) that an RF channel serves as an EUTRA carrier. To find a suitable cell, the terminal apparatus scans all RF channels in the EUTRA operating bands in accordance with the capability information on the terminal apparatus. On each carrier frequency, the terminal apparatus demands only searching for the strongest cell. As soon as a suitable cell is found, the cell is selected.

Stored information cell selection needs stored information on a carrier frequency from previously received measurement control information elements or from previously detected cells, and optionally further needs information on a cell parameter. As soon as the terminal apparatus finds a suitable cell, the terminal apparatus selects the cell. In a case that no suitable cell is found, the initial cell selection procedure is started.

In addition to the normal cell selection, manual selection of CSGs is supported by the terminal apparatus, in accordance with a request from a higher layer.

Clear priorities of different EUTRAN frequencies or inter-RAT frequencies may be provided to the terminal apparatus in the system information (e.g., an RRC connection release message), or by inheriting from the other RAT at inter-RAT cell (re)selection. In the case of system information, a EUTRAN frequency or an inter-RAT frequency is listed without the provision of a priority.

In a case that the priorities are provided in dedicated signalling, the terminal apparatus ignores all the priorities provided in the system information. In a case that the terminal apparatus is in a state of camping on any cell, the terminal apparatus only applies the priorities provided in the system information from a current cell (currently connected cell). The terminal apparatus holds the priorities provided by the dedicated signalling or by the RRC connection release message, unless otherwise specified.

The terminal apparatus in the idle mode can synchronize time and frequency of a cell with the PSS/SSS, and can decode the PSS/SSS to acquire a cell ID of the cell. The terminal apparatus can estimate a frequency position of the CRS by using the cell ID, and can perform RSRP/RSRQ measurement.

Note that EUTRAN measurement includes measurement by the terminal apparatus in the connected mode. The terminal apparatus performs the EUTRAN measurement at a proper measurement gap and is in synchronization with the cell in which the EUTRAN measurement is performed. The EUTRAN measurement includes intra-frequency RSRP/RSRQ, inter-frequency RSRP/RSRQ, a time difference between reception and transmission by the terminal apparatus, a time difference between reference signals (RSTD) used for positioning of the terminal apparatus, inter-RAT (EUTRAN-GERAN/UTRAN) measurement, and inter-system (EUTRAN-non 3GPP RAT) measurement. The EUTRAN measurement is defined as physical layer measurement. The EUTRAN measurement is used for supporting the mobility.

The terminal apparatus in the idle mode and the terminal apparatus in the connected mode perform a cell search and capture time and frequency synchronization with a cell to detect a PCI of the cell. The EUTRA cell search supports transmission bandwidth expandable to at least 6 resource blocks.

The PSS/SSS and/or a synchronization signal equivalent to the PSS/SSS is transmitted in the downlink for the cell search. That is, the terminal apparatus performs the cell search using the PSS/SSS and/or the synchronization signal equivalent to the PSS/SSS. The terminal apparatus assumes that antenna ports 0 to 3 and the PSS/SSS and/or the synchronization signal equivalent to the PSS/SSS in the serving cell are Quasi Co-Located (QCL) to a Doppler shift and an average delay.

The neighboring cell search is performed based on the identical downlink signal to the initial cell search.

The RSRP measurement is performed based on a reference signal/pilot signal equivalent to a CSI-RS of the CRS or the configured Discovery Signal (DS).

In a case where the terminal apparatus in a normal camping state has an individual priority other than the priority for the current frequency, the terminal apparatus regards the current frequency as a lower priority frequency (i.e., lower than any of the configured values of eight networks).

While the terminal apparatus is camping on a suitable CSG cell, the terminal apparatus always regards the current frequency as a higher priority frequency (i.e., higher than any of the configured values of eight networks) regardless of any other priority values allocated to the current frequency.

In a case that the terminal apparatus becomes the RRC_CONNECTED state, in a case that a timer (T320) for an optional validity time of a dedicated priority expires, or in a case that PLMN selection is performed by a request from the NAS, the terminal apparatus deletes the priority provided by the dedicated signalling.

The terminal apparatus simply performs cell re-selection estimation on EUTRAN frequencies or inter-RAT frequencies that are given in the system information and for which the terminal apparatus has a provided priority.

The terminal apparatus does not consider any blacklisted cell as a candidate for cell re-selection.

The terminal apparatus succeeds the priorities provided by the dedicated signalling and the continuing validity time.

In a case where the terminal apparatus supports manual CSG selection, the AS scans all RF channels in the EUTRA operating bands corresponding to the capability information to search for available CSGs in response to a request from the NAS. On each carrier, the terminal apparatus searches for the strongest cell at least, reads the system information of the cell, and reports, to the NAS, an available CSG-ID together with the PLMN and a "Home Node B (HNB) name" (in a case of being broadcasted).

In a case where the NAS selects a CSG and provides the selection to the AS, the terminal apparatus searches for an acceptable or suitable cell satisfying a condition for belonging to the selected CSG to camp on.

In addition to the normal cell re-selection, in a case where at least one CSG-ID associated with a PLMN identifier is included in a CSG whitelist of the terminal apparatus, the terminal apparatus may use an autonomous search function in accordance with performance requirements to detect at least previously visited (accessed) CSG member cells on non-serving frequencies and inter-RAT frequencies. To search for cells, the terminal apparatus may further use an autonomous search function on the serving frequency. In a case that the CSG whitelist of the terminal apparatus is empty, the terminal apparatus disables the autonomous search function for CSG cells. Here, the autonomous search function on each terminal apparatus implementation determines when and where to search for CSG member cells.

In a case that the terminal apparatus detects at least one suitable CSG cell on different frequencies and the related CSG cell is the highest ranked cell on that frequency, the terminal apparatus re-selects one of the detected cells irrespective of the frequency priority of the cell on which the terminal apparatus is currently camping.

In a case that the terminal apparatus detects a suitable CSG cell on the same frequency, the terminal apparatus re-selects the cell in accordance with the normal cell re-selection rule.

In a case that the terminal apparatus detects at least one CSG cell on another RAT, the terminal apparatus re-selects one of those cells in accordance with a specific rule.

While camping on a suitable CSG cell, the terminal apparatus applies the normal cell re-selection.

To search for suitable CSG cells on non-serving frequencies, the terminal apparatus may use the autonomous search function. In a case that the terminal apparatus detects a CSG cell on a non-serving frequency and the detected CSG cell is the highest ranked cell on the frequency, the terminal apparatus may re-select the detected CSG cell.

In a case that the terminal apparatus detects one or more CSG cells on another RAT and in a case of being allowed in accordance with a specific rule, the terminal apparatus may re-select one of those CSG cells.

In addition to normal cell re-selection rules, the terminal apparatus uses the autonomous search function for detecting at least a previously visited hybrid cell included in the CSG whitelist, in which a CSG ID and an associated PLMN identifier meet performance requirements. The terminal apparatus treats the detected hybrid cell as a CSG cell, in a case where the CSG ID and the associated PLMN identifier of the hybrid cell are included in the CSG whitelist, and also treats other cells as normal cells.

In the normally camping state, the terminal apparatus performs the following tasks (B1) to (B4).
(B1) The terminal apparatus selects and monitors an indicated paging channel of the cell in accordance with the information transmitted in the system information.
(B2) The terminal apparatus monitors associated system information.
(B3) The terminal apparatus performs necessary measurement for a cell re-selection estimation procedure.
(B4) The terminal apparatus performs the cell re-selection estimation procedure, in accordance with an internal trigger of the terminal apparatus and/or in a case that information on the Broadcast Control CHannel (BCCH) used for the cell re-selection estimation procedure is modified.

After a transition from the connected mode to the idle mode, in a case where information on a redirected carrier (redirectedCarrierInfo) is included in an RRC connection release message, the terminal apparatus attempts to camp on a suitable cell in accordance with the information. In a case that the terminal apparatus fails to find a suitable cell, the terminal apparatus is allowed to camp on any suitable cell of the indicated RAT. Unless the RRC connection release message includes the information on the redirected carrier, the terminal apparatus attempts to select a suitable cell on a EUTRA carrier. In a case that no suitable cell is found, the terminal apparatus starts cell selection by using the stored information cell selection procedure to search for a suitable cell to camp on.

After the terminal apparatus transits to a connected mode from a state of camping on any cell and the terminal apparatus is re-adjusted to an idle mode, in a case that the information relating to a redirected carrier is included in the RRC connection release message, the terminal apparatus attempts to camp on an acceptable cell in accordance with the information on the redirected carrier. Unless the RRC connection release message includes the information on the redirected carrier, the terminal apparatus attempts to select an acceptable cell on the EUTRA carrier. In a case that the terminal apparatus fails to find an acceptable cell, the terminal apparatus is continuously searching for an acceptable cell of any PLMN, in any one of cell selection states. In any one of the cell selection states, the terminal apparatus that is not camping on any cell stays in this state until the terminal apparatus finds an acceptable cell.

In a state of camping on any cell, the terminal apparatus performs the following tasks (C1) to (C6).
(C1) In accordance with the information transmitted in the system information, the terminal apparatus selects and monitors an indicated paging channel of the cell.
(C2) The terminal apparatus monitors associated system information.
(C3) The terminal apparatus performs necessary measurement for the cell re-selection estimation procedure.
(C4) The terminal apparatus performs the cell re-selection estimation procedure in accordance with an internal trigger of the terminal apparatus and/or in a case that information on the BCCH used for the cell re-selection estimation procedure have been modified.
(C5) The terminal apparatus regularly tries all the frequencies of all RATs supported by the terminal apparatus to find a suitable cell. In a case that a suitable cell is found, the terminal apparatus transits to the normally camping state.
(C6) In a case where the terminal apparatus supports a voice service, but the current cell does not support an emergency call as indicated by the system information, and no suitable cell is found, the terminal apparatus performs cell selection/re-selection to an acceptable cell of any supported RAT, regardless of the priorities provided in the system information from the current cell.

To prevent the terminal apparatus from camping on a cell in which the terminal apparatus is not capable of starting an IP Multimedia Subsystem (IMS) emergency call, the terminal apparatus allows not to perform re-selection of an EUTRAN cell within the frequency.

After the terminal apparatus performs PLMN selection and cell selection, the terminal apparatus camps on the cell. Accordingly, the terminal apparatus becomes capable of receiving paging information and system information such as an MIB and an SIB 1, regardless of the state of the terminal apparatus (an RRC idle (idle mode), an RRC connection (connected mode)). By performing random access, the terminal apparatus can transmit an RRC connectivity request.

In the random access procedure in the terminal apparatus in the idle mode, a higher layer (L2/L3) instructs random access preamble transmission. A physical layer (L1) transmits the random access preamble in accordance with the instruction. In the L1, an ACK, which is a random access response, is received from a base station apparatus. L2/L3 receives the instruction from the L1, and then the L2/L3 instructs the L1 to transmit an RRC connectivity request. The terminal apparatus transmits, to the base station apparatus (a cell on which the terminal apparatus camps, EUTRAN, PLMN), an RRC connectivity request (PUSCH corresponding to a UL-SCH to which an RRC message associated with the RRC connectivity request is mapped). In a case of receiving the RRC connectivity request, the base station apparatus transmits, to the terminal apparatus, an RRC connection setup (a control signal equivalent to a PDCCH and a data signal equivalent to a PDSCH associated with a DL-SCH to which an RRC message associated with the RRC connection set-up is mapped). In a case of receiving the RRC connection setup on the L2/L3, the terminal apparatus enters the connected mode. The L2/L3 of the terminal apparatus instructs the L1 to transmit an RRC connection setup complete, and the procedure ends. The L1 transmits, to the base station apparatus, the RRC connection setup complete (PUSCH corresponding to a UL-SCH to which an RRC message associated with the RRC connection set-up complete is mapped).

Note that, in the LR cell, in a case that standalone type communication is possible, the terminal apparatus in the idle mode may transit to the connection mode after performing a random access procedure equivalent to the above.

To reduce the power consumption, the terminal apparatus in the idle mode may receive a paging message by utilizing Discontinuous Reception (DRX). Here, a Paging Occasion (PO) serves as a subframe including a P-RNTI, in which a control signal equivalent to a PDCCH to address to a paging message is transmitted. A Paging Frame (PF) is a radio frame including one or multiple POs. While the DRX is being utilized, the terminal apparatus needs to monitor one PO at every DRX cycle. The PO and PF are determined by using a DRX parameter provided in the system information. In a case that a value of the DRX parameter is changed in the system information, a DRX parameter stored in the terminal apparatus is updated locally. Unless the terminal apparatus has an International Mobile Subscriber Identity (IMSI), for performing an emergency call without a Universal Subscriber Identity Module (USIM), the terminal apparatus uses a default identifier (UE_ID = 0) and i_s in the PF. That is, the paging information (PCH) is notified by using a PDCCH in a prescribed subframe of a predefined radio frame.

The terminal apparatus camping on a cell captures time frequency synchronization from a synchronization signal equivalent to the PSS/SSS, and acquires the PCI. Subsequently, the terminal apparatus detects broadcast information equivalent to an MIB from a broadcast signal equivalent to the PBCH and acquires the carrier frequency, the downlink transmission bandwidth, the SFN, and the PHICH configuration. By acquiring the MIB, the terminal apparatus is enabled to monitor a control signal equivalent to the PDCCH mapped to the whole downlink transmission bandwidth. In a case where the received PDCCH involves the CRC scrambled with the SI-RNTI, the terminal apparatus acquires an SI message such as the SIB 1 from the PDSCH corresponding to the received PDCCH. By acquiring these SI messages, the terminal apparatus is enabled to acquire information related to configurations for the physical channel/physical signal and information related to cell selection and the like. Further, in a case where the received PDCCH involves the CRC scrambled with the P-RNTI, the terminal apparatus can detect the PCH in the PDSCH corresponding to the received PDCCH to acquire the paging information. The terminal apparatus performs an initial access in the random access procedure, in a case of transiting from the idle mode to the connected mode. By performing initial access, the base station apparatus is enabled to acquire information of the terminal apparatus. After completion of the initial access, the terminal apparatus and the base station apparatus can establish the RRC connection. After establishing the RRC connection, the terminal apparatus transits to the connected mode. Further, once the terminal apparatus becomes capable of monitoring the PDCCH, the terminal apparatus periodically checks whether the terminal apparatus is in or out of synchronization by using the PDCCH. In a case where out of synchronization is determined, the terminal apparatus notifies a higher layer of the determination. After receiving the notification, the higher layer determines the occurrence of Radio Link Failure (RLF) in the cell.

The terminal apparatus and the base station apparatus may employ a technique for aggregating the frequencies (component carriers or frequency bands) of multiple different frequency bands through the CA and treating the aggregated frequencies as a single frequency (frequency band). A component carrier includes an uplink component carrier corresponding to the uplink (uplink cell) and a downlink component carrier corresponding to the downlink (downlink cell). In each embodiment of the present invention, "frequency" and "frequency band" may be used synonymously.

For example, in a case that five component carriers having frequency bandwidths of 20 MHz are aggregated through the CA, a terminal apparatus capable of performing the CA may perform transmission and/or reception by assuming that the aggregated carriers have a frequency bandwidth of 100 MHz. Note that component carriers to be aggregated may have contiguous frequencies or partially discontiguous frequencies. For example, assuming that available frequency bands include an 800 MHz band, a 2 GHz band, and a 3.5 GHz band, a component carrier may be transmitted in the 800 MHz band, another component carrier may be transmitted in the 2 GHz band, and yet another component carrier may be transmitted in the 3.5 GHz band. The terminal apparatus and/or the base station apparatus may simultaneously transmit and/or receive, using a component carrier (a component carrier equivalent to a cell) belonging to the operating bands.

It is also possible to aggregate multiple contiguous or discontiguous component carriers of the same frequency bands. The frequency bandwidth of each component carrier may be narrower (e.g., 5 MHz or 10 MHz) than the receivable frequency bandwidth (e.g., 20 MHz) of the terminal apparatus, and the frequency bandwidth of component carriers to be aggregated may be different from each other. A terminal apparatus and/or a base station apparatus having an NX function may support both a cell with backward compatibility with an LTE cell and a cell without the backward compatibility.

Moreover, a terminal apparatus and/or a base station apparatus having an LR function may aggregate multiple component carriers (carrier types, cells) without backward compatibility with LTE. Note that the number of uplink component carriers to be allocated to (configured for or added for) the terminal apparatus by the base station apparatus may be the same as or may be fewer than the number of downlink component carriers.

A cell constituted by an uplink component carrier in which an uplink control channel is configured for a radio resource request and a downlink component carrier having a cell-specific connection with the uplink component carrier is referred to as a PCell. A cell constituted by component carriers other than the component carriers of the PCell is referred to as an SCell. The terminal apparatus receives a paging message, detects update of broadcast information, performs an initial access procedure, configures security information, and the like in a PCell, and may not necessarily perform these operations in the SCell.

The PCell is not a target of activation and deactivation control (in other words, regarded as being always activated), whereas the SCell has activated and deactivated states, the change of the states of which is explicitly specified by the base station apparatus or is made based on a timer configured for the terminal apparatus for each component carrier. A PCell and an SCell are collectively referred to as a serving cell (current cell).

A terminal apparatus and/or a base station apparatus supporting both the LTE cell and the LR cell, in a case of communicating using both the LTE cell and the LR cell, may constitute a cell group for the LTE cells and a cell group for the LR cells. That is, each of the cell group for the LTE cells and the cell group for the LR cells, may include a cell equivalent to the PCell.

Note that, the CA enables communication using multiple component carriers (frequency bands) and using multiple cells, and is also referred to as cell aggregation. The terminal apparatus may have a radio connection (RRC connection) with the base station apparatus via a relay station device (or a repeater) for each frequency. In other words, a base station apparatus in the present embodiment may be replaced with a relay station device.

The base station apparatus manages a cell, which corresponds to an area where terminal apparatuses can communicate with the base station apparatus, for each frequency. A single base station apparatus may manage multiple cells. Cells are classified into multiple types of cells depending on the size of the area (cell size) that allows for communication with terminal apparatuses. For example, cells are classified into macro cells and small cells. Moreover, small cells are classified into femto cells, pico cells, and nano cells depending on the size of the area. In a case that a terminal apparatus is capable of communicating with a certain base station apparatus, a cell configured to be used for the communication with the terminal apparatus is referred to as a serving cell, while the other cells that are not used for the communication are referred to as neighboring cells, among the cells of the base station apparatus.

In other words, in the CA, multiple serving cells thus configured include one PCell and one or more SCells.

The PCell is a serving cell, in which an initial connection establishment procedure (RRC connection establishment procedure) has been performed, a serving cell in which a connection re-establishment procedure (RRC connection re-establishment procedure) has been started, or a cell that has been indicated as a PCell in a handover procedure. The PCell operates at a primary frequency. At a time point when a connection is (re)established, or after such a time point, an SCell may be configured. Each SCell operates at a secondary frequency. The connection may be referred to as an RRC connection. For the terminal apparatus supporting the CA, a single PCell and at least one SCells may be aggregated.

In a case where the terminal apparatus is configured with more than one serving cell or is configured with a secondary cell group, the terminal apparatus holds, for each serving cell, a received soft channel bit corresponding to at least a prescribed range in response to a decoding failure in code blocks of a transport block for at least a prescribed number of transport blocks.

An LAA terminal may support a function corresponding to at least two types of Radio Access Technology (RAT).

The LAA terminal supports at least two operating bands. That is, the LAA terminal supports a function for the CA.

Furthermore, the LAA terminal may support Time Division Duplex (TDD) and Half Duplex Frequency Division Duplex (HD-FDD). Further, the LAA terminal may support Full Duplex FDD (FD-FDD). The LAA terminal may indicate which duplex mode/frame structure type is supported, via higher layer signalling such as capability information.

Moreover, the LAA terminal may serve as an LTE terminal of a category X (X is a prescribed value). That is, in the LAA terminal, the maximum number of bits of transport blocks transmittable and/or receivable in a single TTI may be extended. In LTE, one TTI corresponds to one subframe.

Note that in each embodiment of the present invention, a TTI and a subframe may be defined individually.

Furthermore, the LAA terminal may support multiple duplex modes/frame structure types.

The frame structure type 1 is applicable to both the FD-FDD and the HD-FDD. In the FDD, 10 subframes can be used for each of downlink transmission and uplink transmission at every 10-ms intervals. Moreover, the uplink transmission and the downlink transmission are separated in the frequency domain. In an HD-FDD operation, the terminal apparatus cannot perform transmission and reception at the same time, but in an FD-FDD operation, there is no such a limitation.

The higher layer signalling may configure a retuning time (the time necessary for the tuning (the number of subframes or symbols)), in a case of the frequency hopping and the change of the used frequency.

For example, in the LLA terminal, the number of downlink transmission modes (PDSCH transmission modes) to be supported may be reduced. That is, in a case that the number of downlink transmission modes or a downlink transmission mode supported by the LAA terminal is indicated as the capability information from the LAA terminal, the base station apparatus configures the downlink transmission mode, based on the capability information. Note that, in a case that a parameter for a downlink transmission mode that is not supported by the LAA terminal is configured, the LAA terminal may ignore the configuration. That is, the LAA terminal may not necessarily perform processing for the downlink transmission mode that is not supported. Here, the downlink transmission mode is used to indicate a transmission scheme of the PDSCH corresponding to the PDCCH/EPDCCH, based on a configured downlink transmission mode, the type of RNTI, a DCI format, or a search space. The terminal apparatus learns, for example, whether the PDSCH is transmitted through an antenna port 0, transmitted through the transmit diversity scheme, or transmitted through multiple antenna ports, based on such pieces of information. The terminal apparatus can properly perform a reception process, based on the pieces of information. Even in a case that the DCI related to the PDSCH resource allocation is detected from the same type of DCI format, in a case where the downlink transmission mode or the type of RNTI is different, the PDSCH is not always transmitted through the same transmission scheme.

In a case where the terminal apparatus supports a function relating to simultaneous transmission of a PUCCH and a PUSCH, and the terminal apparatus supports a function relating to repeated transmission of a PUSCH and/or repeated transmission of a PUCCH, the PUCCH and the PUSCH may be transmitted repeatedly a prescribed number of times, at a timing when the PUSCH transmission is performed or at a timing when the PUCCH transmission is performed. That is, the PUCCH and the PUSCH may be transmitted at the same timing (i.e., in the same subframe).

In such a case, the PUCCH may include a CSI report, an HARQ-ACK, and an SR.

All signals are transmittable and/or receivable in a PCell, but some signals may not necessarily be transmittable and/or receivable in an SCell. For example, a PUCCH is transmitted only in a PCell. Additionally, unless multiple Timing Advance Groups (TAGs) are configured for the cells, a PRACH is transmitted only in a PCell. Additionally, a PBCH is transmitted only in a PCell. Additionally, an MIB is transmitted only in a PCell. However, in a case where a terminal apparatus supports a function of transmitting a PUCCH and an MIB in an SCell, a base station apparatus may instruct the terminal apparatus to transmit a PUCCH and an MIB in such an SCell (a frequency corresponding to the SCell). That is, in the case where the terminal apparatus supports the function, the base station apparatus may configure, for the terminal apparatus, a parameter for transmitting a PUCCH and an MIB in the SCell.

In a PCell, a Radio Link Failure (RLF) is detected. In an SCell, even in a case that conditions for detection of an RLF are met, the detection of the RLF is not recognized. In a lower layer of the PCell, in a case that conditions for an RLF are satisfied, the lower layer of the PCell notifies a higher layer of the PCell of the fact that the conditions for an RLF are satisfied. Semi-Persistent Scheduling (SPS) or Discontinuous Transmission (DRX) may be performed in a PCell. In an SCell, the same DRX as the DRX in a PCell may be performed. In an SCell, MAC configuration information/parameters are basically shared with the PCell of the same call group. Some of the parameters (e.g., sTAG-Id) may be configured for each SCell. Some of timers or counters may be applied to the PCell only. A timer or a counter applied to the SCell only may be configured.

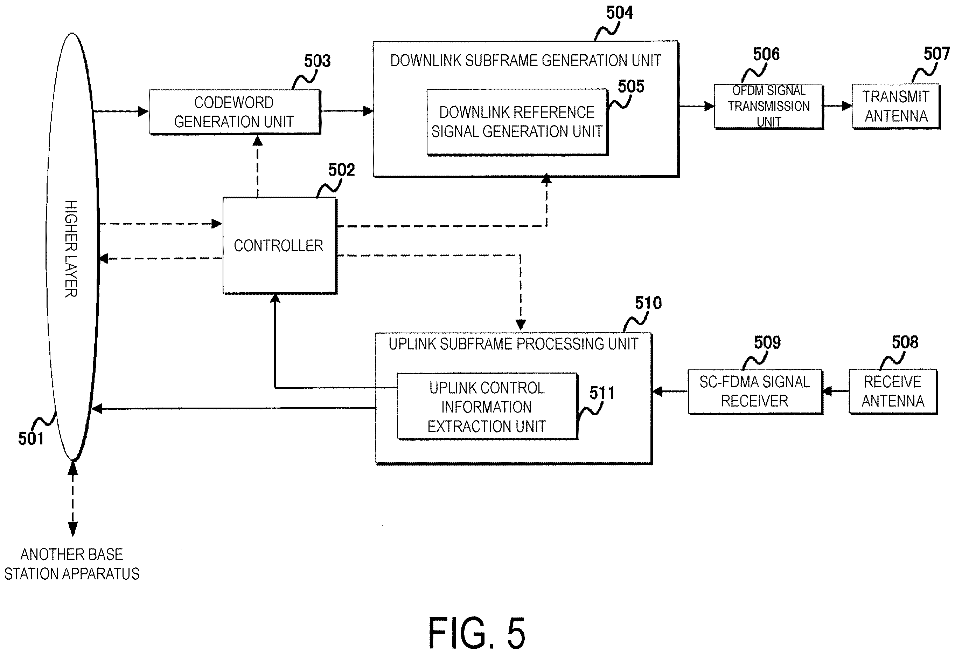

FIG. 5 is a schematic diagram illustrating an example of a block configuration of a base station apparatus 2 according to the present embodiment. The base station apparatus 2 includes a higher layer (higher-layer control information notification unit) 501, a controller (base station controller) 502, a codeword generation unit 503, a downlink subframe generation unit 504, an OFDM signal transmission unit (downlink transmitter) 506, a transmit antenna (base station transmit antenna) 507, a receive antenna (base station receive antenna) 508, an SC-FDMA signal receiver (channel state measurement unit and/or CSI receiver) 509, and an uplink subframe processing unit 510. The downlink subframe generation unit 504 includes a downlink reference signal generation unit 505. Moreover, the uplink subframe processing unit 510 includes an uplink control information extraction unit (CSI acquisition unit/HARQ-ACK acquisition unit/SR acquisition unit) 511. Note that, the SC-FDMA signal receiver 509 concurrently has a measuring unit for a receive signal, CCA, and interference noise power. Note that, the SC-FDMA signal receiver, in a case that the terminal apparatus supports transmission of an OFDM signal, may be an OFDM signal receiver, or may include an OFDM signal receiver. Note that, the downlink subframe generation unit may be a downlink TTI generation unit, or may include a downlink TTI generation unit. The downlink TTI generation unit may be a generation unit for a physical channel and/or a physical signal constituting a downlink TTI. Note that an uplink may be similar to the above.

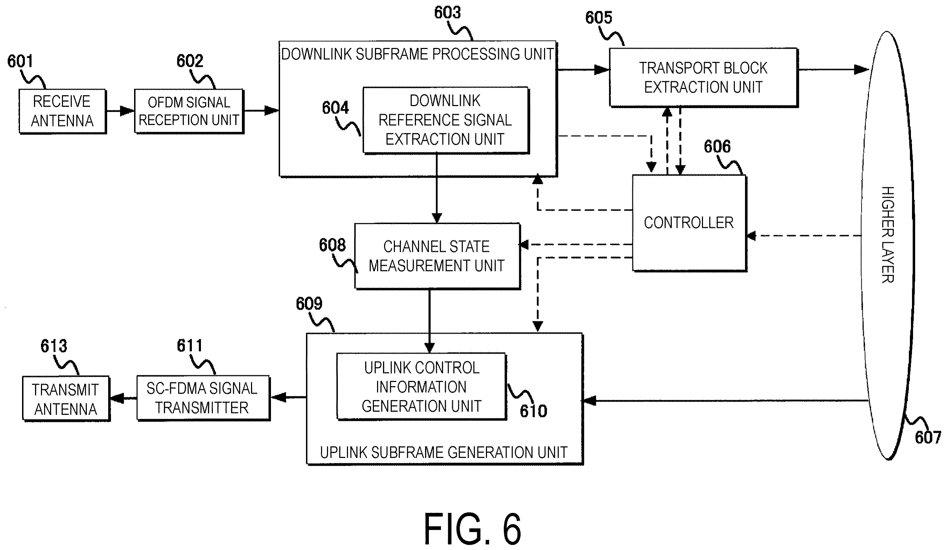

FIG. 6 is a schematic diagram illustrating an example of a block constitution of the terminal apparatus 1 according to the present embodiment. The terminal apparatus 1 includes a receive antenna (terminal receive antenna) 601, an OFDM signal reception unit (downlink receiver) 602, a downlink subframe processing unit 603, a transport block extraction unit (data extraction unit) 605, a controller (terminal controller) 606, a higher layer (higher-layer control information acquisition unit) 607, a channel state measurement unit (CSI generation unit) 608, an uplink subframe generation unit 609, SC-FDMA signal transmitters (UCI transmitters) 611 and 612, and transmit antennas (terminal transmit antennas) 613 and 614. The downlink subframe processing unit 603 includes a downlink reference signal extraction unit 604. Moreover, the uplink subframe generation unit 609 includes an uplink control information generation unit (UCI generation unit) 610. Note that, the OFDM signal reception unit 602 concurrently has a measuring unit for a receive signal, CCA, and interference noise power. That is, in the OFDM signal reception unit 602, RRM measurement may be performed. The SC-FDMA signal transmitter, in a case that the terminal apparatus supports transmission of an OFDM signal, may be an OFDM signal transmission unit, or may include an OFDM signal transmission unit. Note that, the uplink subframe generation unit may be an uplink TTI generation unit, or may include a downlink TTI generation unit. Further, the terminal apparatus may include a power controller for controlling/setting transmit power of an uplink signal.

In each of FIG. 5 and FIG. 6, higher layers may include a Medium Access Control (MAC) layer, a Radio Link Control (RLC) layer, a Packet Data Convergence Protocol (PDCP) layer, and a Radio Resource Control (RRC) layer.

The RLC layer transmits to the higher layers: Transparent Mode (TM) data, Unacknowledged Mode (UM) data, and Acknowledged Mode (AM) data including an indication indicates that Packet Data Unit (PDU) transmission by the higher layer has succeeded. Further, the RLC layer transmits data, and notifies the lower layers of a transmission opportunity with a whole size of the RLC PDU transmitted in a transmission opportunity.

The RLC layer supports: a function associated with transmission of the higher layer PDU, a function associated with error correction with the Automatic Repeat reQuest (ARQ) (only for the AM data transmission), a function associated with combination/division/reconstruction of a RLC Service Data Unit (SDU) (only for the UM and AM data transmission), a function associated with redivision of the RLC data PDU (for the AM data transmission), a function associated with sorting of the RLC data PDU (only for the AM data transmission), a function associated with overlap detection (only for the UM and AM data transmission), a function associated with discard of the RLC SDU (only for the UM and AM data transmission), a function associated with RLC re-establishment, and a function associated with protocol error detection (only for the AM data transmission).

First, a flow of downlink data transmission and/or reception will be described by using FIG. 5 and FIG. 6. In the base station apparatus 2, the controller 502 holds a Modulation and Coding Scheme (MCS) indicating a modulation scheme, a coding rate, and the like in the downlink, downlink resource allocation indicating RBs to be used for data transmission, and information to be used for HARQ control (a Redundancy Version, an HARQ process number, and a New Data Indicator (NDI)) and controls the codeword generation unit 503 and downlink subframe generation unit 504 based on these elements. Downlink data (also referred to as a downlink transport block, DL-SCH data, or DL-SCH transport block) transmitted from the higher layer 501 is processed through error correction coding, rate matching, and the like in the codeword generation unit 503, under the control of the controller 502, and a codeword is then generated. Two codewords at maximum are transmitted at the same time in a single subframe of a single cell. In the downlink subframe generation unit 504, a downlink subframe is generated in accordance with an instruction from the controller 502. First, a codeword generated in the codeword generation unit 503 is converted into a modulation symbol sequence through a modulation process, such as Phase Shift Keying (PSK) modulation or Quadrature Amplitude Modulation (QAM). Moreover, a modulation symbol sequence is mapped onto REs of some RBs, and a downlink subframe for each antenna port is generated through a precoding process. In this operation, a transmission data sequence transmitted from the higher layer 501 includes higher-layer control information, which is control information on the higher layer (e.g., dedicated (individual) Radio Resource Control (RRC) signaling). Moreover, in the downlink reference signal generation unit 505, a downlink reference signal is generated. The downlink subframe generation unit 504 maps the downlink reference signal to the REs in the downlink subframe in accordance with an instruction from the controller 502. The downlink subframe generated in the downlink subframe generation unit 504 is modulated to an OFDM signal in the OFDM signal transmission unit 506 and then transmitted via the transmit antenna 507. Although a configuration including one OFDM signal transmission unit 506 and one transmit antenna 507 is provided as an example here, a configuration including multiple OFDM signal transmission units 506 and transmit antennas 507 may be employed in a case that downlink subframes are transmitted through multiple antenna ports. Moreover, the downlink subframe generation unit 504 may also have the capability of generating physical layer downlink control channels, such as a PDCCH, an EPDCCH, or a control channel and/or a shared channel equivalent to the PDCCH and the EPDCCH to map the channels to the REs in the downlink subframe. Each of multiple base station apparatuses transmits an individual downlink subframe.

In the terminal apparatus 1, an OFDM signal is received by the OFDM signal reception unit 602 via the receive antenna 601, and an OFDM demodulation process is performed on the signal.

The downlink subframe processing unit 603 first detects physical layer downlink control channels, such as a PDCCH and an EPDCCH, or a control channel equivalent to the PDCCH and the EPDCCH. More specifically, the downlink subframe processing unit 603 decodes signals by assuming that a PDCCH and an EPDCCH or a control channel equivalent to the PDCCH and the EPDCCH have been transmitted in the regions to which the PDCCH and the EPDCCH or the control channel/the shared channel equivalent to the PDCCH and the EPDCCH are allocated, and checks Cyclic Redundancy Check (CRC) bits added beforehand (blind decoding). In other words, the downlink subframe processing unit 603 monitors a PDCCH and an EPDCCH or a control channel/a shared channel equivalent to the PDCCH and the EPDCCH. In a case that the CRC bits match an ID (a single terminal-specific identifier (UEID) assigned to a single terminal, such as a Cell-Radio Network Temporary Identifier (C-RNTI) or a Semi-Persistent Scheduling-C-RNTI (SPS-C-RNTI), or a Temporary C-RNTI) assigned by the base station apparatus beforehand, the downlink subframe processing unit 603 recognizes that a PDCCH or an EPDCCH or a control channel/shared channel equivalent to the PDCCH or the EPDCCH has been detected and extracts the data channel/shared channel equivalent to the PDSCH or the PDSCH by using control information included in the detected PDCCH, EPDCCH or control channel equivalent to the PDCCH or the EDCCH.

The controller 606 holds an MCS indicating a modulation scheme, a coding rate, and the like in the downlink based on the control information, downlink resource allocation indicating RBs to be used for downlink data transmission, and information to be used for HARQ control, and controls the downlink subframe processing unit 603, the transport block extraction unit 605, and the like based on these elements. More specifically, the controller 606 controls the downlink subframe generation unit 504 to perform an RE demapping process, a demodulation process, and the like, corresponding to an RE mapping process and a modulation process. The PDSCH extracted from the received downlink subframe is transmitted to the transport block extraction unit 605. The downlink reference signal extraction unit 604 in the downlink subframe processing unit 603 extracts the DLRS from the downlink subframe.

In the transport block extraction unit 605, a rate matching process, a rate matching process corresponding to error correction coding, error correction decoding, and the like in the codeword generation unit 503 are performed, and a transport block is extracted and transmitted to the higher layer 607. The transport block includes the higher-layer control information, and the higher layer 607 notifies the controller 606 of a necessary physical layer parameter based on the higher-layer control information. Each of the multiple base station apparatuses 2 transmits an individual downlink subframe, and the terminal apparatus 1 receives the downlink subframes. Hence, the terminal apparatus 1 may perform the above-described processes for the downlink subframe of each of the multiple base station apparatuses 2. In this situation, the terminal apparatus 1 may recognize or may not necessarily recognize that multiple downlink subframes have been transmitted from the multiple base station apparatuses 2. In a case that the terminal apparatus 1 does not recognize multiple transmission sources of the subframes, the terminal apparatus 1 may simply recognize that multiple downlink subframes have been transmitted in multiple cells. Moreover, the transport block extraction unit 605 determines whether the transport block has been detected correctly and transmits the determination result to the controller 606.

Here, the transport block extraction unit 605 may include a buffer portion (soft buffer portion). In the buffer portion, information on the extracted transport block can be stored temporarily. For example, in a case that the same transport block (retransmitted transport block) is received, and decoding of data for this transport block is not successful, the transport block extraction unit 605 combines (composes) newly received data with the data for this transport block temporarily stored in the buffer portion, and attempts to decode the combined data. In a case that the temporarily-stored data becomes unnecessary or in a case that a prescribed condition is satisfied, the buffer portion flushes the data. A condition for data to be flushed differs depending on the type of transport block corresponding to the data. The buffer portion may be prepared for each data type. For example, as the buffer portion, a message-3 buffer or an HARQ buffer may be prepared, or a buffer portion may be prepared for each layer, L1/L2/L3. Note that flushing information/data includes flushing a buffer in which information and data are stored.

Next, a flow of uplink signal transmission and/or reception will be described. In the terminal apparatus 1, a downlink reference signal extracted by the downlink reference signal extraction unit 604 is transmitted to the channel state measurement unit 608 under the instruction from the controller 606, the channel state and/or interference is measured in the channel state measurement unit 608, and further CSI is calculated based on the measured channel state and/or interference. The controller 606 instructs the uplink control information generation unit 610 to generate an HARQ-ACK (DTX (not transmitted yet), ACK (detection succeeded), or NACK (detection failed)) and map the resultant to a downlink subframe based on the determination result of whether the transport block is correctly detected. The terminal apparatus 1 performs these processes on the downlink subframe of each of multiple cells. In the uplink control information generation unit 610, a PUCCH or a control channel/shared channel equivalent to the PUCCH including the calculated CSI and/or HARQ-ACK is generated. In the uplink subframe generation unit 609, the PUSCH including the uplink data transmitted from the higher layer 607 or a data channel/shared channel equivalent to the PUSCH and the PUCCH generated by the uplink control information generation unit 610 or a control channel are mapped to the RBs in an uplink subframe to generate an uplink subframe.

The SC-FDMA signal receiver 509 receives an SC-FDMA signal through the receive antenna 508, and performs an SC-FDMA demodulation process on the signal. In the uplink subframe processing unit 510, the controller 502 instructs extraction of RBs, to which the PUCCH is mapped, and instructs the uplink control information extraction unit 511 to extract the CSI included in the PUCCH. The extracted CSI is transmitted to the controller 502. The CSI is used for controlling downlink transmission parameters (MCS, downlink resource allocation, HARQ, and the like) by the controller 502. Note that, the SC-FDMA signal receiver may be an OFDM signal reception unit. Further, the SC-FDMA signal receiver may include an OFDM signal reception unit.

The base station apparatus assumes a maximum output power P_{CMAX} configured by the terminal apparatus from a power headroom report, and assumes an upper limit value of the power for each physical uplink channel, based on the physical uplink channel received from the terminal apparatus. The base station apparatus determines a transmit power control command value for a physical uplink channel, based on the above assumptions, and transmits the value to the terminal apparatus on a PDCCH along with a downlink control information format. The above operations enable a power adjustment for the transmit power of the physical uplink channel/signal (or the uplink physical channel/physical signal) transmitted from the terminal apparatus.

The base station apparatus allocates resources to the PDCCH/PDSCH to prevent allocation to the PBCH resource (or a broadcast channel equivalent to the PBCH), in a case of transmitting the PDCCH (EPDCCH)/PDSCH (or a shared channel/control channel of the LR cell equivalent to the PDCCH (EPDCCH)/PDSCH) to the terminal apparatus.

The PDSCH may be used for transmitting the respective messages/information related to SIB/RAR/paging/unicast for the terminal apparatus.

The frequency hopping for the PUSCH may be separately configured according to a grant type. For example, parameter values used for the frequency hopping in the PUSCH corresponding to each of a dynamic schedule grant, a semi-persistent grant, and an RAR grant may be separately configured. These parameters may not be indicated in the uplink grant. Further, these parameters may be configured through the higher layer signalling including the system information.

The above-described various parameters may be configured for each physical channel. Further, the above-described various parameters may be configured for each terminal apparatus. Further, the above-described parameters may be configured commonly for the terminal apparatuses. Here, the above-described various parameters may be configured by using the system information. Further, the above-described various parameters may be configured by using the higher layer signalling (RRC signaling, MAC CE). Further, the above-described various parameters may be configured by using the PDCCH/EPDCCH. The above-described various parameters may be configured as broadcast information. Further, the above-described various parameters may be configured as unicast information.

Note that, in the above-described embodiments, the power value demanded in each PUSCH transmission has been described that they are calculated based on: parameters configured by higher layers; an adjustment value determined by the number of PRBs allocated to the PUSCH transmission by resource assignment; a downlink path loss and a coefficient by which the path loss is multiplied; an adjustment value determined by a parameter indicating an offset of the MCS applied to UCI; a correction value obtained by a TPC command, and the like. Moreover, descriptions have been given that the power value demanded by each PUCCH transmission is calculated based on: a parameter configured by a higher layer; a downlink path loss; an adjustment value determined by the UCI transmitted by the PUCCH; an adjustment value determined by the PUCCH format; an adjustment value determined by the antenna port number used for the PUCCH transmission; the value based on the TPC command, and the like. However, the calculation of the power value is not limited to the above descriptions. An upper limit value may be set for the demanded power value, and the smallest value of the value based on the above-described parameters and the upper limit value (e.g., P_{CMAX, c}, which is the maximum output power value of a serving cell c) may be used as the demanded power value.

A program running on each of the base station apparatus and the terminal apparatus according to one aspect of the present invention may be a program for controlling a Central Processing Unit (CPU) and the like (a program for causing a computer to operate) to enable the functions in the above-described embodiments of the present invention. The information exchanged between these devices is temporarily stored in a Random Access Memory (RAM) while being processed. Subsequently, the information is stored in various types of Read Only Memory (ROM) such as a flash ROM and a Hard Disk Drive (HDD), and is read by the CPU to be modified or rewritten, as appropriate.

Moreover, the terminal apparatus and/or the base station apparatus in the above-described embodiments may be partially achieved by a computer. In such a case, a program for enabling such control functions may be recorded on a computer-readable recording medium to cause a computer system to read the program recorded on the recording medium for execution.

Note that "computer system" serves as a computer system built into a terminal apparatus or a base station apparatus, and such a computer system may include an OS and hardware components such as a peripheral device. Furthermore, the "computer-readable recording medium" refers to a portable medium such as a flexible disk, a magneto-optical disk, a ROM, and a CD-ROM, and a storage device such as a hard disk built into the computer system.

Moreover, "computer-readable recording medium" may include a medium that dynamically retains a program for a short period of time, such as a communication line that is used to transmit the program over a network such as the Internet or over a communication line such as a telephone line, and may include a medium that retains a program for a given period of time, such as a volatile memory within the computer system that functions as a server or a client in such a case. Furthermore, the above-described program may be configured to enable some of the functions described above, and additionally may be configured to enable the functions described above, in combination with a program already recorded in the computer system.

Furthermore, the base station apparatus in the above-described embodiments can be achieved as an aggregation (a device group) including multiple devices. Each of devices constituting such a device group may be equipped with some or all portions of each function or each functional block of the base station apparatus in the above-described embodiments. As the device group, at least general functions or general functional blocks of the base station apparatus may be provided. Furthermore, the terminal apparatus in the above-described embodiments can also communicate with the base station apparatus as an aggregate.

Furthermore, the base station apparatus in the above-described embodiments may be an Evolved Universal Terrestrial Radio Access Network (EUTRAN). Furthermore, the base station apparatus 2 in the above-described embodiments may have some or all portions of the function of a higher node than an eNodeB.

Furthermore, some or all portions of each of the terminal apparatus and the base station apparatus in the above-described embodiments may be achieved as an LSI, which is a typical integrated circuit, or may be achieved as a chip set. The functional blocks of the terminal apparatus and the base station apparatus may be individually achieved as a chip, or some or all of the functional blocks may be integrated into a chip. The circuit integration technique is not limited to LSI, and may be achieved as a dedicated circuit or a general-purpose processor. Furthermore, in a case where with advances in semiconductor technology, a circuit integration technology with which an LSI is replaced appears, it is also possible to use an integrated circuit based on the technology.

Furthermore, in the above-described embodiments, a cellular mobile station device (cellular phone, portable terminal) has been described as one example of a terminal apparatus or a communication device. However, the present invention is not limited to this, and is applicable to a fixed-type electronic apparatus installed indoors or outdoors, or a stationary-type electronic apparatus, for example, a terminal apparatus or a communication device, such as an Audio-Video (AV) apparatus, a kitchen appliance (e.g., a refrigerator and a microwave), a cleaning or washing machine, an air-conditioning apparatus, office equipment, a vending machine, vehicle loading machine for car navigation or the like, and other household apparatuses.

From the foregoing, the present invention provides the following characteristics.
(1) A terminal apparatus according to an aspect of the present invention is a terminal apparatus that communicates with a base station apparatus, the terminal apparatus including a receiver configured to receive a handover command and an uplink grant, and a transmitter configured to transmit a sounding reference signal (SRS) and a physical uplink shared channel (PUSCH), in which the transmitter, based on a transmit power control command included in the uplink grant, calculates a first power control adjustment value used for transmit power of the SRS, the transmitter, in a case that a timing advance command is included in the handover command, sets an initial value of a second power control adjustment value used for transmit power of a PUSCH including an RRC connection reconfiguration complete message for the handover command to the first power control adjustment value of the SRS, and, based on the first power control adjustment value, sets transmit power of the PUSCH.
(2) A terminal apparatus according to an aspect of the present invention is the above-described terminal apparatus, in which the transmitter, in a case that the handover command includes a first parameter for the PUSCH, and a value of the first parameter is changed, sets an initial value of the second power control adjustment value used for transmit power of the PUSCH to a prescribed value.
(3) A terminal apparatus according to an aspect of the present invention is the above-described terminal apparatus, in which the transmitter, in a case that the handover command does not include the timing advance command, sets the second power control adjustment value to a prescribed value.
(4) A terminal apparatus according to an aspect of the present invention is the above-described terminal apparatus, in which the transmitter, in a case that the handover command includes an uplink grant, sets an initial value of the second power control adjustment value, based on a transmit power control command included in the uplink grant.
(5) A terminal apparatus according to an aspect of the present invention is the above-described terminal apparatus, in which the transmitter, in a case that the handover command does not include an uplink grant, sets an initial value of the second power control adjustment value to a prescribed value.
(6) A terminal apparatus according to an aspect of the present invention is the above-described terminal apparatus, in which the transmitter, in a case that handover using a random access preamble is indicated based on the handover command, sets the second power control adjustment value, based on the number of transmissions of the random access preamble used for transmit power of a random access preamble and a second parameter for ramp-up.
(7) A terminal apparatus according to an aspect of the present invention is the above-described terminal apparatus, in which in a case that the receiver receives a third parameter for ramp-up of transmit power of the PUSCH via the handover command, and in a case that there is no ACK or NACK for the PUSCH for a prescribed duration after transmission of the PUSCH, the transmitter resets transmit power of the PUSCH, based on the third parameter and the number of transmissions of the PUSCH, and retransmits the PUSCH.
(8) A terminal apparatus according to an aspect of the present invention is the above-described terminal apparatus, in which the transmitter, in a case that a NACK for the PUSCH is detected in the receiver, does not ramp up based on the third parameter and the number of transmissions and retransmits the PUSCH.
(9) A method according to an aspect of the present invention is a method in a terminal apparatus that communicates with a base station apparatus, the method including the steps of: receiving a handover command and an uplink grant; transmitting a sounding reference signal (SRS); transmitting a physical uplink shared channel (PUSCH); calculating, based on a transmit power control command included in the uplink grant, a first power control adjustment value used for transmit power of the SRS; setting, in a case that a timing advance command is included in the handover command, an initial value of a second power control adjustment value used for transmit power of a PUSCH including an RRC connection reconfiguration complete message for the handover command to the first power control adjustment value of the SRS; setting, based on the first power control adjustment value, transmit power of the PUSCH.
(10) A method according to an aspect of the present invention is the above-described method, the method including the step of: setting, in a case that the handover command includes a first parameter for the PUSCH, and a value of the first parameter is changed, an initial value of the second power control adjustment value used for transmit power of the PUSCH to a prescribed value.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of the present invention defined by claims, and embodiments that are made by suitably combining technical means disclosed according to the different embodiments are also included in the technical scope of the present invention. Furthermore, a configuration in which a constituent element that achieves the same effect is substituted for the one that is described in the embodiments is also included in the technical scope of the present invention.

### Reference Signs List

- 501: Higher layer
- 502: Controller
- 503: Codeword generation unit
- 504: Downlink sub frame generation unit
- 505: Downlink reference signal generation unit
- 506: OFDM signal transmission unit
- 507: Transmit antenna

## Claims

1. A terminal apparatus that communicates with a base station apparatus, the terminal apparatus comprising:
a receiver configured to receive a handover command and an uplink grant; and
a transmitter configured to transmit a Sounding Reference Signal (SRS) and a Physical Uplink Shared CHannel (PUSCH),
wherein the transmitter, based on a transmit power control command included in the uplink grant, calculates a first power control adjustment value used for transmit power of the SRS,
the transmitter,
in a case that a timing advance command is included in the handover command, sets an initial value of a second power control adjustment value used for transmit power of a PUSCH including an RRC connection reconfiguration complete message for the handover command to the first power control adjustment value of the SRS, and,
based on the first power control adjustment value, sets transmit power of the PUSCH.

2. The terminal apparatus according to claim 1,
wherein the transmitter,
in a case that the handover command includes a first parameter for the PUSCH, and a value of the first parameter is changed, sets an initial value of the second power control adjustment value used for transmit power of the PUSCH to a prescribed value.

3. The terminal apparatus according to claim 1,
wherein the transmitter,
in a case that the handover command does not include the timing advance command, sets the second power control adjustment value to a prescribed value.

4. The terminal apparatus according to claim 1,
wherein the transmitter,
in a case that the handover command includes an uplink grant, sets an initial value of the second power control adjustment value, based on a transmit power control command included in the uplink grant.

5. The terminal apparatus according to claim 1,
wherein the transmitter,
in a case that the handover command does not include an uplink grant, sets an initial value of the second power control adjustment value to a prescribed value.

6. The terminal apparatus according to claim 1,
wherein the transmitter,
in a case that handover using a random access preamble is indicated based on the handover command, sets the second power control adjustment value, based on the number of transmissions of the random access preamble used for transmit power of a random access preamble and a second parameter for ramp-up.

7. The terminal apparatus according to claim 1,
wherein in a case that the receiver receives a third parameter for ramp-up of transmit power of the PUSCH via the handover command, and in a case that there is no ACK or NACK for the PUSCH for a prescribed duration after transmission of the PUSCH,
the transmitter resets transmit power of the PUSCH, based on the third parameter and the number of transmissions of the PUSCH, and retransmits the PUSCH.

8. The terminal apparatus according to claim 7,
wherein the transmitter,
in a case that a NACK for the PUSCH is detected in the receiver, does not ramp up based on the third parameter and the number of transmissions and retransmits the PUSCH.

9. A method in a terminal apparatus that communicates with a base station apparatus, comprising the steps of:
receiving a handover command and an uplink grant;
transmitting a Sounding Reference Signal (SRS);
transmitting a Physical Uplink Shared CHannel (PUSCH);
calculating, based on a transmit power control command included in the uplink grant, a first power control adjustment value used for transmit power of the SRS;
setting, in a case that a timing advance command is included in the handover command, an initial value of a second power control adjustment value used for transmit power of PUSCH including an RRC connection reconfiguration complete message for the handover command to the first power control adjustment value of the SRS; and
setting, based on the first power control adjustment value, transmit power of the PUSCH.

10. The method according to claim 9, comprising the step of:
setting, in a case that the handover command includes a first parameter for the PUSCH, and a value of the first parameter is changed, an initial value of the second power control adjustment value used for transmit power of the PUSCH to a prescribed value.
